# EUROPÄISCHE PATENTSCHRIFT

(11) **EP 1 612 389 B1**
(45) Veröffentlichungstag und Bekanntmachung des Hinweises auf die Patenterteilung: **13.08.2014**
(21) Anmeldenummer: 05104989.8
(22) Anmeldetag: 08.06.2005
(51) Int. Cl.: F02D 13/02, F02B 27/06, F02D 9/04, F04F 5/20

(54) **Brennkraftmaschine mit mindestens vier Zylindern und Verfahren zur Optimierung des Ladungswechsels einer derartigen Brennkraftmaschine**
Internal combustion engine comprising at least four cylinders and method for optimizing gas exchanges in such an engine
Moteur à combustion interne comprenant au moins quatre cylindres et procédé d'optimisation des échanges gaseux dans un tel moteur

(30) Priorität: 29.06.2004 DE 102004031363
(43) Veröffentlichungstag der Anmeldung: 04.01.2006
(73) Patentinhaber: Ford Global Technologies, LLC, Dearborn, MI 48126 (US)
(72) Erfinder: Breuer, Michael, 52152, Simmerath (DE)
(74) Vertreter: Drömer, Hans-Carsten

(56) Entgegenhaltungen:
- WO-A1-00/23698
- WO-A1-82/02925
- DE-A1- 10 151 530
- FR-A- 645 250
- FR-A- 810 526
- FR-A1- 2 673 680
- JP-U- 60 006 827

## Beschreibung

Die Erfindung betrifft eine Viertakt-Brennkraftmaschine mit mindestens vier Zylindern, die in der Art konfiguriert sind, daß sie mindestens eine Untergruppe von vier Zylindern bilden, bei denen die Abstände der aufeinanderfolgenden Zündzeitpunkte jeweils etwa 180°KW betragen, wobei jeder Zylinder mit mindestens einem Einlaßventil, welches eine Einlaßöffnung freigibt oder versperrt, und mit zwei Auslaßventilen, welche jeweils eine Auslaßöffnung freigeben oder versperren, ausgestattet ist und diese zwei Auslaßventile im Hinblick auf ihre Steuerzeiten einen Versatz Δ in der Art aufweisen, daß jeder Zylinder über ein vorauslaufendes Auslaßventil und ein nachlaufendes Auslaßventil verfügt.

Des Weiteren betrifft die Erfindung ein Verfahren zur Optimierung des Ladungswechsels einer derartigen Brennkraftmaschine.

Der überwiegende auf dem Markt befindliche Anteil an Kraftfahrzeugen ist mit einer Brennkraftmaschine der oben genannten d. h. gattungsbildenden Art ausgestattet, wobei wiederum der weitaus größte Teil dieser Brennkraftmaschinen mit vier Zylindern ausgestattet ist. Eine konstruktive Möglichkeit eine Brennkraftmaschine mit vier Zylindern auszubilden, bildet der Reihenmotor d.h. die Anordnung der Zylinder in einer Reihe.

Ein nicht unwesentlicher Anteil dieser Motoren ist aufgeladen, was verständlich wird, wenn man berücksichtigt, daß sich eine Entwicklung hin zu kleinen, hochaufgeladenen Motoren vollzogen hat und weiter vollzieht. Für die Entwicklung hin zu kleinen, aufgeladenen Motoren gibt es mehrere Gründe, von denen im folgenden einige angesprochen werden sollen.

Dabei ist die Aufladung in erster Linie ein Verfahren zur Leistungssteigerung, bei dem die für den motorischen Verbrennungsprozeß benötigte Luft verdichtet wird, so daß pro Arbeitsspiel eine größere Luftmasse in den Brennraum gelangt. Dadurch kann die verwertbare Kraftstoffmasse gesteigert werden. Bei gezielter Auslegung der Aufladung können ebenfalls Vorteile im Wirkungsgrad und bei den Abgasemissionen erzielt werden.

Ein typischer Vertreter der kleinen, hochaufgeladenen Motoren ist ein Ottomotor mit vier in Reihe angeordneten Zylindern und Abgasturboaufladung, bei der die Abgasenergie zur Verdichtung der Verbrennungsluft eingesetzt wird, und der zusätzlich über eine Ladeluftkühlung verfügt, mit der die komprimierte Verbrennungsluft vor Eintritt in den Brennraum gekühlt wird. Der Ladeluftkühler senkt die Lufttemperatur und steigert damit die Dichte der Luft, wodurch auch der Kühler zu einer besseren Füllung des Brennraums mit Luft d.h. zu einer größeren Luftmasse beiträgt.

Die Aufladung ist daher ein geeignetes Mittel, bei unverändertem Hubraum die Leistung einer Brennkraftmaschine zu steigern, oder bei gleicher Leistung den Hubraum zu reduzieren. Bei gleichen Fahrzeugrandbedingungen läßt sich so das Lastkollektiv zu höheren Lasten hin verschieben, wo der spezifische Kraftstoffverbrauch niedriger ist. Unterstützt wird dieser Wirkungsgradvorteil durch die geringeren Reibungsverluste des hubraumkleineren Motors. Eine durch Erhöhung der spezifischen Drehmomente mögliche Hubraumreduktion bei gleichen Fahrleistungen wird auch als Downsizing bezeichnet und verfolgt das Ziel der Verbrauchsabsenkung.

Schwierigkeiten hingegen bereitet die Auslegung des Abgasturboladers, wobei grundsätzlich eine spürbare Leistungssteigerung in allen Drehzahlbereichen angestrebt wird. Nach dem Stand der Technik wird aber ein starker Drehmomentabfall bei Unterschreiten einer bestimmten Drehzahl beobachtet.

Folglich ist es im Rahmen der Entwicklungsarbeiten von aufgeladenen Motoren ein primäres Ziel, das Drehmomentangebot bzw. das Leistungsangebot im unteren und mittleren Drehzahlbereich anzuheben. Dieses Ziel wird aber grundsätzlich bei der Entwicklung von Motoren verfolgt. So ist man auch bei nicht aufgeladenen Motoren d.h. Saugmotoren bemüht, im unteren und mittleren Drehzahlbereich das Leistungsangebot zu steigern.

Ein Lösungsansatz, die Leistung einer Brennkraftmaschine im unteren und mittleren Drehzahlbereich anzuheben, besteht darin, im Rahmen des Ladungswechselvorgang eine möglichst hohe Zylinderfrischladung zu realisieren d. h. zu einer besseren Füllung des Brennraums mit Verbrennungsluft bzw. Frischgemisch zu gelangen.

Unterstützt werden kann dies unter anderem mit variablen Steuerzeiten der Ein- und Auslaßventile. Im Gegensatz zu konventionellen Ventiltrieben, bei denen sowohl der Hub der Ventile als auch die Steuerzeiten, d. h. die Öffnungs- und Schließzeiten der Einlaß- und Auslaßventile, bedingt durch die nicht flexible, da nicht verstellbare Mechanik des Ventiltriebes als unveränderliche Größen vorgegeben sind, können diese Parameter mittels variabler Ventiltriebe mehr oder weniger stark drehzahlabhängig variiert und damit die Zylinderfüllung optimiert werden.

So beeinflußt insbesondere die Steuerzeit, zu der das Einlaßventil schließt (ES), die Füllung des Brennraums und damit die Drehmomentcharakteristik der Brennkraftmaschine. Bei niedrigen Drehzahlen ist es vorteilhaft, das Einlaßventil früh zu schließen, was jedoch bei hohen Drehzahlen, insbesondere bei der Nenndrehzahl, zu ungewollten Füllungsverlusten führt. Daher wird bei hohen Drehzahlen bevorzugt, das Einlaßventil spät zu schließen, um in diesem Drehzahlbereich eine gute Füllung des Brennraums sicherzustellen. Ein spätes Schließen des Einlaßventils führt aber durch teilweises Ausschieben der frisch angesaugten Zylinderladung zu Füllungsverlusten bei niedrigen Drehzahlen. Eine feste Steuerzeit bildet daher immer einen Kompromiß zwischen den beiden oben beschriebenen, kollidierenden Szenarien. Ideal ist es, wenn die Steuerzeit, zu der das Einlaßventil schließt, drehzahlabhängig variabel steuerbar ist, was mittels eines variablen Ventiltriebs realisiert werden kann. Bei niedrigen Drehzahlen könnte dann das Einlaßventil früh, bei hohen Drehzahlen spät geschlossen werden.

Eine Variation der sogenannten Ventilüberschneidung d. h. des Kurbelwinkelbereiches in der Nähe des oberen Totpunkts, in dem das Auslaßventil bei bereits leicht geöffnetem Einlaßventil noch nicht geschlossen ist, kann die Qualität des Ladungswechsels ebenfalls maßgeblich beeinflussen. Dies stellt einen weiteren Anwendungsfall für eine variable Ventilsteuerung dar.

Im Bereich der Ventilüberschneidung kann es zu Spülverlusten kommen, wobei ein Teil des angesaugten Gemisches bzw. der angesaugten Luft durch den Brennraum strömt ohne an der Verbrennung teilzunehmen. Dies führt einerseits zu schlechteren Wirkungsgraden, aber andererseits zu einer größeren Zylinderfüllung und damit zu einer höheren Leistung. Bei niedrigen Drehzahlen wird eine kleinere und bei größeren Drehzahlen eine größere Ventilüberschneidung angestrebt. Eine variable Ventilsteuerung ermöglicht eine Variation der Ventilüberschneidung in Abhängigkeit von der Drehzahl.

Nachteilig an der Verwendung variabler Ventiltriebe zur Beeinflussung des Ladungswechsels ist, daß eine voll variable Ventilsteuerung für den Einsatz bei den hier in Rede stehenden Motoren, die überwiegend bei Fahrzeugen der unteren Mittelklasse zu finden sind, noch zu kostenintensiv ist.

Ein Nockenwellenversteller, der eine Variation der Steuerzeiten durch das Verdrehen der Nockenwelle generiert, ist zwar kostengünstiger aber auch nur bedingt zielführend, da mittels einer derartigen Vorrichtung die Steuerzeiten nur einheitlich und in geringem Maße nach früh oder nach spät verschoben werden können. Wird beispielsweise die Schließzeit des Einlaßventils (ES) nach früh verschoben, was - wie oben bereits erwähnt - bei niedrigen Drehzahlen angestrebt wird, dann wird zwangsläufig auch die Öffnungszeit des Einlaßventils (EÖ) nach früh verschoben, was zu einer vergrößerten Ventilüberschneidung führt, die bei niedrigen Drehzahlen grundsätzlich vermieden werden soll.

Ein anderer Lösungsansatz zur Optimierung des Ladungswechsels nutzt die dynamischen Wellenvorgänge im Ansaug- bzw. Abgastrakt. Dabei wird der Umstand ausgenutzt, daß sich Druckschwankungen in gasförmigen Medien als Wellen ausbreiten, die durch die Ansaugrohre bzw. Abgasrohre laufen und an dem offenen oder geschlossenen Ende des Rohres reflektiert werden. Die Strömung im Rohr ergibt sich dann aus der Überlagerung der vorlaufenden und reflektierten Welle.

Um diese Effekte für die Optimierung des Ladungswechsels nutzbar zu machen, kann beispielsweise der Ansaugtrakt in der Art ausgelegt werden, daß gegen Ende des Ansaugtaktes an der Einlaßöffnung eine Überdruckwelle ankommt, die zu einer Verdichtung und damit zu einem gewissen Nachladeeffekt führt. Hierzu muß das Saugrohr aber in seiner Länge richtig abgestimmt werden.

In der Praxis erweist sich dieser Lösungsansatz ebenfalls als nicht zufriedenstellend, da die zur Erzielung des Nachladeeffektes erforderliche Saugrohrlänge von der Drehzahl der Brennkraftmaschine abhängt. Daher wirkt sich die Saugrohrabstimmung nur in einem sehr begrenzten Drehzahlbereich vorteilhaft aus, wobei bei hohen Drehzahlen ein eher kurzes Saugrohr und bei niedrigen Drehzahlen ein längeres Saugrohr erforderlich ist.

Die Offenlegunsschrift JP 60 006827 U offenbart eine Brennkraftmaschine mit den Merkmalen des Oberbegriffs des Anspruch 1. Weitere relevante Offenbarungen sind die FR 2 673 680 A1, FR 810 526 A sowie FR 645 250 A.

Vor diesem Hintergrund ist es die Aufgabe der vorliegenden Erfindung, eine Brennkraftmaschine der gattungsbildenden Art bereitzustellen, mit der die aus dem Stand der Technik bekannten Nachteile überwunden werden, und mit der insbesondere ein verbesserter Ladungswechsel verwirklicht wird, so daß das Drehmomentangebot insbesondere im unteren und mittleren Drehzahlbereich im Vergleich zu herkömmlichen, vergleichbaren Brennkraftmaschinen angehoben wird.

Eine weitere Teilaufgabe der vorliegenden Erfindung ist es, ein Verfahren zur Optimierung des Ladungswechsels einer derartigen Brennkraftmaschine aufzuzeigen.

Gelöst wird die erste Teilaufgabe durch eine Viertakt-Brennkraftmaschine mit mindestens vier Zylindern, die in der Art konfiguriert sind, daß sie mindestens eine Untergruppe von vier Zylindern bilden, bei denen die Abstände der aufeinanderfolgenden Zündzeitpunkte jeweils etwa 180°KW betragen, wobei jeder Zylinder mit mindestens einem Einlaßventil, welches eine Einlaßöffnung freigibt oder versperrt, und mit zwei Auslaßventilen, welche jeweils eine Auslaßöffnung freigeben oder versperren, ausgestattet ist und diese zwei Auslaßventile im Hinblick auf ihre Steuerzeiten einen Versatz Δ in der Art aufweisen, daß die Öffnungszeiten einen Versatz Δ₁ ≥ 0 und die Schließzeiten einen Versatz Δ₂ ≥ 0 aufweisen und jeder Zylinder über ein vorauslaufendes Auslaßventil und ein nachlaufendes Auslaßventil verfügt, und die dadurch gekennzeichnet ist, daß die beiden Auslaßöffnungen jedes Zylinders jeweils über eine separate Abgasleitung verfügen, die nicht miteinander in Verbindung stehen, wobei die Auslaßöffnung des vorauslaufenden Auslaßventils eines Zylinders mit der Auslaßöffnung des nachlaufenden Auslaßventils des vorher gezündeten Zylinders mittels einer zusätzlichen Leitung in der Weise in Verbindung steht, daß die zusätzliche Leitung von der Abgasleitung des vorauslaufenden Auslaßventils abzweigt und beim Übergang in die Abgasleitung des nachlaufenden Auslaßventils zusammen mit dieser Abgasleitung eine Strahlpumpe ausbildet mit einem ersten Strömungsquerschnitt A₁ für einen Abgasförderstrom und einem zweiten Strömungsquerschnitt A₂ für einen zu fördernden Abgasstrom.

Die erfindungsgemäße Brennkraftmaschine nutzt den Vorlastausstoß, der sich beim Öffnen eines Auslaßventils eines Zylinders einstellt, zur Unterstützung des Ladungswechsels des vorher gezündeten Zylinders. Dieses Wirkprinzip soll im folgenden ausführlich erläutert werden.

Die Evakuierung der Verbrennungsgase aus dem Zylinder der Brennkraftmaschine im Rahmen des Ladungswechsels beruht im wesentlichen auf zwei unterschiedlichen Mechanismen. Wenn sich zu Beginn des Ladungswechsels das Auslaßventil nahe dem unteren Totpunkt (UT) öffnet, strömen die Verbrennungsgase aufgrund des gegen Ende der Verbrennung im Zylinder vorherrschenden hohen Druckniveaus und der damit verbundenen hohen Druckdifferenz zwischen Brennraum und Abgastrakt mit hoher Geschwindigkeit durch die Auslaßöffnung in das Abgassystem. Dieser druckgetriebene Strömungsvorgang wird durch eine hohe Druckspitze begleitet, die auch als Vorlastausstoß bezeichnet wird und sich entlang der Abgasleitung mit Schallgeschwindigkeit fortpflanzt.

Im weiteren Verlauf des Ladungswechsels gleichen sich die Drücke im Zylinder und in der Abgasleitung weitgehend aus, so daß die Verbrennungsgase nun mit Hilfe des Kolbens, der sich vom unteren Totpunkt (UT) in Richtung des oberen Totpunktes (OT) bewegt, ausgeschoben werden.

Erfindungsgemäß verfügt jeder Zylinder der Brennkraftmaschine über zwei Auslaßventile, von denen ein Auslaßventil früher öffnet (AÖ) und früher schließt (AS) als das andere. Die Steuerzeiten der beiden Auslaßventile weisen einen Versatz Δ auf d. h. die Öffnungszeiten weisen einen Versatz Δ₁ ≥ 0 auf und die Schließzeiten weisen einen Versatz Δ₂ ≥ 0 auf, so daß jeder Zylinder über ein vorauslaufendes Auslaßventil und ein nachlaufendes Auslaßventil verfügt. Wenn Δ₁ ≠ Δ₂ gewählt wird d.h. die Öffnungsdauern von vor- und nachlaufendem Auslaßventil unterschiedlich gewählt werden, kann dadurch beispielsweise den unterschiedlichen Strömungssituationen in Vorauslaß- und Überschneidungsphase noch besser Rechnung getragen werden. Realisiert werden kann dies in einfacher Art und Weise durch unterschiedliche Nockenkonturen.

Nach dem Stand der Technik werden versetzt arbeitende Auslaßventile aus akustischen Gründen bevorzugt, da damit das geräuschintensive Aufsetzen des Ventiltellers im Ventilsitz nicht für beide Auslaßventile zeitgleich erfolgt.

Im Rahmen der vorliegenden Erfindung hat diese Ausführung der Auslaßventile andere Gründe. Auf diese Weise kann nämlich der Vorlastausstoß gelenkt und verstärkt werden, was besonders vorteilhaft ist, wie weiter unten noch zu sehen sein wird. Dadurch, daß zunächst nur ein Auslaßventil öffnet, stehen den Verbrennungsgasen zu Beginn des Ladungswechsels keine zwei Auslaßöffnungen, sondern nur eine Auslaßöffnung zur Verfügung, wodurch die als Vorlastausstoß bezeichnete Drucküberhöhung in nur eine Abgasleitung entlassen wird und dabei sowohl in ihrer Amplitude, als auch in ihrer zeitlichen Erstreckung zunimmt.

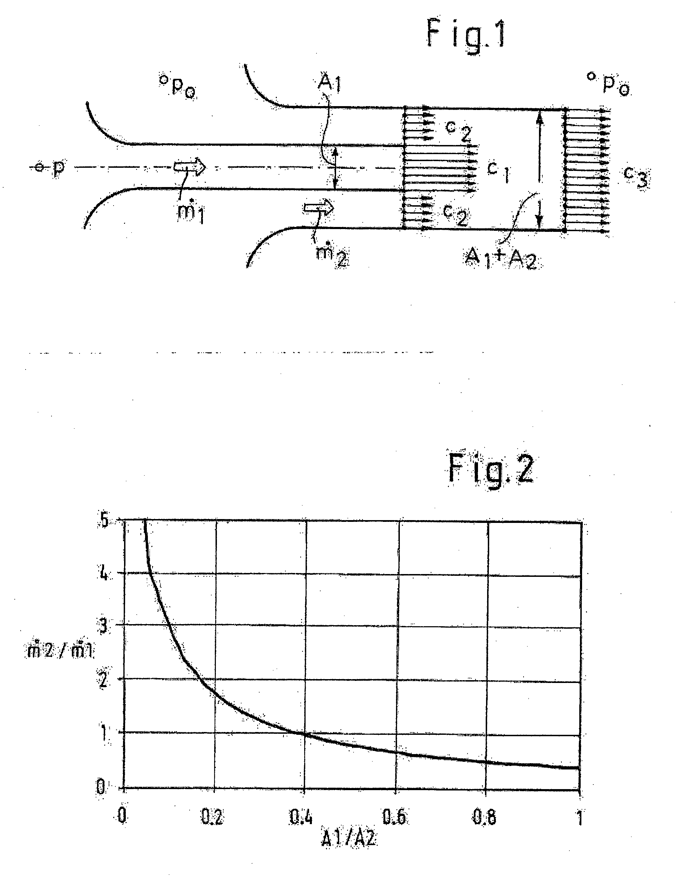

Der Vorlastausstoß pflanzt sich entlang der jeweiligen Abgasleitung fort und kann zusammen mit weiteren geeigneten Maßnahmen für den Ladungswechsel eines anderen Zylinders verwendet werden. Hierzu bedient man sich erfindungsgemäß dem Prinzip der Strahlpumpe, welches schematisch in Figur 1 dargestellt ist.

Bei einer Strahlpumpe wird ein erster Fluidstrom ṁ₁ zur Förderung eines zweiten Fluidstromes ṁ₂ verwendet.

Auf die gattungsgemäße Brennkraftmaschine übertragen, kann gemäß dem Strahlpumpenprinzip die Abgasströmung eines Zylinders - als erster Fluidstrom d.h. Förderstrom - für den Ladungswechsel eines anderen Zylinders, nämlich der Evakuierung der Verbrennungsgase aus diesem Zylinder als dem zweiten, zu fördernden Fluidstrom genutzt werden.

Besonders effektiv ist die Förderung nach dem Strahlpumpenprinzip, wenn der dem Förderstrom zur Verfügung gestellte Strömungsquerschnitt A₁ klein ist, da hierdurch die Geschwindigkeit c₁ des Förderstromes im Bereich der Strahlpumpe hoch ist. Dies gelingt aber nur dann, wenn der Druck p stromauf der Strahlpumpe hoch ist. Nun wird ersichtlich, weshalb die als Vorlastausstoß bezeichnete Druckspitze im Abgasstrom des vorauslaufenden Auslaßventils vorteilhaft ist.

Zur Realisierung der Strahlpumpe wird die Auslaßöffnung eines vorauslaufenden Auslaßventils eines Zylinders mit der Auslaßöffnung eines anderen, vorher gezündeten Zylinders verbunden und zwar mit der Auslaßöffnung des nachlaufenden Auslaßventils des anderen Zylinders.

Dies hat mehrere Gründe. Zum einen soll die Auslaßöffnung des vorauslaufenden Auslaßventils des anderen Zylinders mit einem weiteren Zylinder verbunden werden und zur Förderung des Ladungswechsels dieses weiteren Zylinders genutzt werden. Zum anderen benötigt der durch die Auslaßöffnung des nachlaufenden Auslaßventils strömende Abgasstrom, der vorwiegend durch den sich in Richtung OT bewegenden Kolben gefördert bzw. ausgeschoben wird, insbesondere gegen Ende des Ausschiebetaktes eine vorrangige Unterstützung im Vergleich zu dem durch die Auslaßöffnung des vorauslaufenden Auslaßventils strömenden Abgasstrom, der vom Vorlastausstoß profitieren kann.

Als weitere Maßnahme zur Ausbildung der erfindungsgemäßen Brennkraftmaschine ist es erforderlich, die beiden zur Ausbildung einer Strahlpumpe dienenden Zylinder in der Art auszuwählen bzw. aufeinander abzustimmen, daß sich der Kolben des einen Zylinders in der Nähe des unteren Totpunktes (UT) befindet, während sich der Kolben des anderen Zylinders in der Nähe des oberen Totpunktes (OT) befindet. D. h. die beiden miteinander gekoppelten Zylinder sollten thermodynamisch in etwa um 180°KW versetzt arbeiten. Dies hat nämlich zur Folge, daß sich das vorauslaufende Auslaßventil des einen, sich im unteren Totpunkt (UT) befindlichen Zylinders gerade öffnet bzw. geöffnet hat, während das nachlaufende Auslaßventil des anderen Zylinders in der Nähe des oberen Totpunktes (OT) wieder in der Schließphase ist. Der Vorlastausstoß des einen Zylinders gelangt somit zu einem Zeitpunkt in die Abgasleitung und die Strahlpumpe, zur der ein anderer, um 180°KW versetzt betriebener Zylinder gegen Ende des Ladungswechsels am sinnvollsten Unterstützung bei der Evakuierung der Verbrennungsgase und der Füllung des Zylinders mit Frischladung benötigt.

Durch die erfindungsgemäße Brennkraftmaschine wird somit die erste der Erfindung zugrunde liegende Aufgabe gelöst, nämlich eine Brennkraftmaschine der gattungsbildenden Art bereitzustellen, mit der insbesondere ein verbesserter Ladungswechsel verwirklicht wird.

Durch den verbesserten Ladungswechsel kann das Drehmomentangebot insbesondere im unteren und mittleren Drehzahlbereich im Vergleich zu herkömmlichen, vergleichbaren Brennkraftmaschinen angehoben werden.

Dadurch, daß der Ladungswechsel eines Zylinders mittels des Vorlastausstoßes eines anderen Zylinders gefördert wird, erfolgt eine weitgehende Restgasausspülung des Brennraums. Dies wiederum hat zwei vorteilhafte Effekte, die beide zu einer Erhöhung der Masse der dem Zylinder zugeführten Frischladung, d. h. Verbrennungsluft oder Frischgemisch, beitragen. Zum einen kann das ursprünglich vom Restgas eingenommene Brennraumvolumen für die Zylinderfrischladung genutzt werden. Zum anderen führt eine weitestgehende Ausspülung der heißen Restgase zu einer Temperaturabsenkung der Zylinderfrischladung und damit zu einer Steigerung der Dichte der Zylinderladung, wodurch eine bessere Füllung des Brennraums ermöglicht wird. Der letztgenannte Effekt ist vergleichbar dem durch einen Ladeluftkühler erzielten Effekt.

Ein weiterer Vorteil der erfindungsgemäßen Brennkraftmaschine besteht in der durch die Temperaturabsenkung verringerten Klopfneigung des Kraftstoffes-LuftGemisches nahe der Vollast.

Da das Viertaktverfahren insgesamt 720°KW umfaßt, ist es sinnvoll vier Zylinder in einer Gruppe in der Art zusammen zu fassen, daß die Abstände der aufeinanderfolgenden Zündzeitpunkte jeweils etwa 180°KW betragen.

Vorteilhaft sind daher Ausführungsformen, bei denen es sich bei der Brennkraftmaschine um einen Vier-Zylinder-Reihenmotor handelt, weil aufgrund der Kröpfungsfolge der Kurbelwelle dieser Motoren die Zündzeitpunkte jeweils den geforderten Abstand von 180°KW aufweisen. Wird ein Vier-Zylinder-Reihenmotor beispielsweise mit der üblichen Zündfolge 1 - 3 - 4 - 2 im Abstand von jeweils 180°KW betrieben, kann bei einer erfindungsgemäßen Ausbildung des Reihenmotors die Auslaßöffnung des vorauslaufenden Auslaßventils des ersten Zylinders mit der Auslaßöffnung des nachlaufenden Auslaßventils des vorher gezündeten, zweiten Zylinders durch eine zusätzliche Leitung verbunden werden. Auf diese Weise wird der Ladungswechsel des zweiten Zylinders durch den Abgasstrom des ersten Zylinders unterstützt.

Werden die anderen Zylinder entsprechend miteinander verbunden, ist jeder Zylinder mit dem um 180°KW vorher und mit dem um 180°KW danach gezündeten Zylinder gekoppelt, so daß der zweite Zylinder den Ladungswechsel des vierten Zylinders, der vierte Zylinder den Ladungswechsel des dritten Zylinders und der dritte Zylinder den Ladungswechsel des ersten Zylinders unterstützt. Im Rahmen der Figurenbeschreibung wird diese Ausführungsform noch näher beschrieben.

Vorteilhaft sind auch Ausführungsformen, bei denen es sich bei der Brennkraftmaschine um einen Acht-Zylinder-V-Motor handelt, bei dem die acht Zylinder zu zwei Gruppen von jeweils vier Zylindern ausgebildet sind, wobei in jeder Gruppe die Abstände der einzelnen Zündzeitpunkte der Zylinder zueinander jeweils 180°KW betragen. Vorzugsweise werden dabei jeweils die vier Zylinder einer Zylinderbank zu einer Gruppe zusammengefaßt. Das für den Vier-Zylinder-Reihenmotor Gesagte kann in analoger Weise übertragen werden.

Weitere vorteilhafte Ausführungsformen der erfindungsgemäßen Brennkraftmaschine werden im Zusammenhang mit den Unteransprüchen beschrieben. In diesem Zusammenhang wird noch deutlicher und leichter ersichtlich, warum die erfindungsgemäße Brennkraftmaschine über einen optimierten Ladungswechsel verfügt.

Vorteilhaft sind Ausführungsformen der Brennkraftmaschine, bei denen die zusätzliche Leitung in der Weise in die Abgasleitung mündet, daß die Mündung der zusätzlichen Leitung von der Abgasleitung umgeben ist, wobei die zusätzliche Leitung einen ersten, vorzugsweise runden, Strömungsquerschnitt A₁ für einen Abgasförderstrom bildet und zwischen Abgasleitung und zusätzlicher Leitung ein zweiter, vorzugsweise ringförmiger, Strömungsquerschnitt A₂ für einen zu fördernden Abgasstrom ausgebildet ist.

Vorteilhaft an dieser Ausführungsform ist, daß der fördernde Abgasstrom hoher Geschwindigkeit c₁, der durch den Querschnitt A₁ in die Abgasleitung des nachlaufenden Auslaßventils eintritt, von einem vorzugsweise ringförmigen Querschnitt umgeben ist und dadurch keinen direkten Kontakt zu Innenwandung der Abgasleitung hat. Der Strahlpumpeneffekt d.h. der Fördereffekt auf den zweiten Abgasastrom ist dadurch besonders ausgeprägt.

Vorteilhaft sind Ausführungsformen der Brennkraftmaschine, bei denen die Abgasleitungen der vorauslaufenden Auslaßventile jeweils mit einem Ventil ausgestattet sind, wobei das Ventil stromabwärts der Abzweigung der zusätzlichen Leitung angeordnet ist.

Erfindungsgemäß verfügen die beiden Auslaßöffnungen jedes Zylinders jeweils über eine separate Abgasleitung. Die Auslaßöffnung des vorauslaufenden Auslaßventils eines Zylinders ist mit der Auslaßöffnung des nachlaufenden Auslaßventils des vorher gezündeten Zylinders mittels einer zusätzlichen Leitung verbunden. Mit anderen Worten gesagt: die Abgasleitung, die von einem vorauslaufenden Auslaßventil ausgeht, gabelt sich stromabwärts in zwei Leitungen, wobei eine erste Leitung als zusätzliche Leitung die Auslaßöffnung des vorauslaufenden Auslaßventils mit der Auslaßöffnung des nachlaufenden Auslaßventils des vorher gezündeten Zylinders verbindet d.h. zur Strahlpumpe führt, wohingegen die andere, zweite Leitung den Abgasstrom auf die herkömmliche Weise führt d.h. in eine Gesamtabgasleitung leitet oder dergleichen. Die zweite Leitung wird im Rahmen der Beschreibung der vorliegenden Erfindung als Fortführung der ursprünglichen Abgasleitung angesehen und bezeichnet.

Das in der Abgasleitung vorgesehene Ventil hat demnach die Aufgabe, den Strömungsquerschnitt der Abgasleitung des vorauslaufenden Auslaßventils stromabwärts der Abzweigung der zusätzlichen Leitung zu vergrößern oder zu verkleinern, gegebenenfalls zu verschließen. Dadurch kann die Aufteilung des Abgasstroms in die beiden Abgasteilströme geregelt werden, insbesondere kann damit die Größe des durch die Strahlpumpe geführten Teilstromes beeinflußt werden.

Weitere Ausführungen hinsichtlich des Ventils und seiner Verwendung, insbesondere hinsichtlich der Steuerung des Ventils in Abhängigkeit von der Drehzahl und der Last der Brennkraftmaschine werden im Zusammenhang mit dem erfindungsgemäßen Verfahren gemacht.

Vorteilhaft sind bei der Verwendung eines Ventils Ausführungsformen der Brennkraftmaschine, bei denen das Ventil eine Drosselklappe umfaßt, wobei diese Drosselklappe vorzugsweise mittels der Motorsteuerung last- und drehzahlabhängig geregelt wird.

Aus dem bisherigen Beschreibungen ergibt sich, das dem Versatz Δ eine doppelte Aufgabe zukommt. Am fördernden Zylinder stellt er sicher, daß der Vorauslastausstoß mit seiner Energie vollständig in den Förderstrom der Strahlpumpe einmündet, da zunächst nur das vorlaufende Auslaßventil geöffnet ist. Am unterstützten Zylinder stellt der Versatz Δ sicher, daß die an der Strahlpumpe hierdurch ausgelöste Saugströmung vollständig für eine Restgasausspülung genutzt wird, wobei vorzugsweise nur noch das nachlaufende Auslaßventil geöffnet ist. Durch eine Ventilüberschneidung, bei der das nachlaufende Auslaßventil und das mindestens ein Einlaßventil geöffnet sind, wird die Restgasausspülung weiter unterstützt.

Vorteilhaft sind Ausführungsformen der Brennkraftmaschine, bei denen für den Versatz Δ, Δ₁, Δ₂ der Steuerzeiten zwischen einem vorauslaufenden Auslaßventil und einem nachlaufenden Auslaßventil eines Zylinders gilt: Δ, Δ₁, Δ₂ < 30°KW, vorzugsweise Δ, Δ₁, Δ₂ < 20°KW ist. Die Größe des Versatzes kann der Länge der Abgasleitungen im Einzelfall angepaßt werden. Es muß berücksichtigt werden, daß dem Vorlastausstoß genügend Zeit eingeräumt werden muß, um die Wegstrecke von der Auslaßöffnung durch die Abgasleitung und die zusätzliche Leitung zur Strahlpumpe hin zurücklegen zu können und weiter zu einem spürbaren Effekt an der Auslaßöffnung des nachlaufenden Auslaßventils zu führen. Dabei sind Zylinder miteinander gekoppelt, die unterschiedlich weit voneinander entfernt liegen.

Strenggenommen umfaßt die erfindungsgemäße Brennkraftmaschine auch Ausführungsformen, die keinen Versatz Δ der in Rede stehenden Steuerzeiten aufweisen bzw. bei denen dieser Versatz Δ = 0 ist. Auch eine derartige Brennkraftmaschine verfügt über die oben ausführlich dargelegten Vorteile, insbesondere über einen verbesserten Ladungswechsel. Es sei aber an dieser Stelle angemerkt, daß die bevorzugte Ausführungsform einen Versatz Δ > 0°KW aufweist d. h. einen Versatz im eigentlichen und tatsächlichen Sinne.

Vorteilhaft sind Ausführungsformen der Brennkraftmaschine, bei denen gilt:
5°KW < Δ, Δ₁, Δ₂ < 15°KW, vorzugsweise 7,5°KW < Δ, Δ₁, Δ₂ < 12,5°KW.

Diese Ausführungsform ermöglicht noch genügend Spielraum bei der Gestaltung der Ventilüberschneidung, auf die man vorzugsweise über die Verstellung der Steuerzeiten des Einlaßventils Einfluß nehmen möchte. Es muß nämlich berücksichtigt werden, daß eine Vergrößerung des Versatzes Δ in der Regel auch eine Vergrößerung der Ventilüberschneidung induziert, zumindest der Ventilüberschneidung zwischen dem mindestens einen Einlaßventil und dem nachlaufenden, versetzten Auslaßventil, was unerwünscht sein kann. Der Versatz dient aber in erster Linie der Vergrößerung der als Vorlastausstoß bezeichneten Druckerhöhung zur Steigerung des Strahlpumpeneffektes, wozu ein Versatz in der angegebenen Größenordnung schon reicht. Die Variation der Ventilüberschneidung erfolgt bevorzugt über die Verstellung der Steuerzeiten des Einlaßventils, soweit dies möglich ist.

Der Strahlpumpeneffekt kann mit einer größer gewählten Ventilüberschneidung effektiver gestaltet werden, wenn hierzu entsprechende Maßnahmen verwendet werden. Wird die Ventilüberschneidung durch ein früheres Öffnen des Einlaßventils (EÖ) realisiert, so ergibt sich bei konstanter, einlaßseitiger Ventilöffnungsdauer ein früheres Einlassende (ES), was, wie bereits beschrieben, im unteren und mittleren Drehzahlbereich zu weiteren Füllungsvorteilen führt. In diesem Fall ergeben sich also Füllungsvorteile sowohl durch die Restgasausspülung infolge des optimierten Strahlpumpeneffektes, als auch durch die verringerten Rückströmverluste infolge des frühen Schließens des Einlaßventils (ES).

Vorteilhaft sind Ausführungsformen der Brennkraftmaschine, bei denen für den Versatz Δ₁, Δ₂ der Steuerzeiten zwischen einem vorauslaufenden Auslaßventil und einem nachlaufenden Auslaßventil eines Zylinders gilt: Δ₁ = Δ₂. Vorteile bietet dies insbesondere im Hinblick auf die Ausgestaltung der Nockenwelle und der Nocken, da für beide Auslaßventile Nocken mit derselben Nockenkontur verwendet werden können.

Vorteilhaft sind Ausführungsformen der Brennkraftmaschine, bei denen die Strömungsflächen A₁ und A₂ in der Art ausgebildet sind, daß gilt: A₁ / A₂ < 0.8, vorzugsweise A₁ / A₂ < 0.6. Derartig große Verhältnisse der Strömungsflächen induzieren große Strömungsflächen A₁ für den fördernden Abgasstrom und bieten daher Vorteile bei hohen Lasten und hohen Drehzahlen, wenn eine relativ große Abgasmenge durch den Strömungsquerschnitt A₁ hindurchgeführt werden muß, weil ein großer Strömungsquerschnitt A₁ einen kleineren Strömungswiderstand bietet.

Vorteilhaft sind aber auch Ausführungsformen der Brennkraftmaschine, bei denen gilt: A₁ / A₂ < 0.4, vorzugsweise A₁ / A₂ < 0.2. Kleinere Querschnittsverhältnisse können bei niedrigen Lasten und niedrigen Drehzahlen sinnvoll sein, wenn nur geringe Abgasmengen durch die Strahlpumpe hindurchgeführt werden müssen. In diesem Anwendungsfall hat der Aspekt des Strömungswiderstandes der Strahlpumpe eine untergeordnete Bedeutung, wohingegen man bemüht ist, im Strömungsquerschnitt A₁ eine hohe Austrittsgeschwindigkeit c₁ zu generieren, was mit einem kleinen Querschnitt A₁ erreicht werden kann. Auf diese Weise läßt sich auch bei niedrigen Lasten und niedrigen Drehzahlen ein entsprechend großer Abgasstrom fördern.

Die Figur 2 zeigt den Zusammenhang zwischen dem Verhältnis der Strömungsflächen A₁ / A₂ und dem Verhältnis der Massenströme ṁ₂ / ṁ₁ der Strahlpumpe.

Es ist zu erkennen, daß der Abgasstrom, der mittels der Strahlpumpe gefördert wird, mit einem abnehmenden Strömungsquerschnitt A₁ stark zunimmt. D. h. unter dem Aspekt, einen maximalen Abgasstrom zu fördern, sollte der Strömungsquerschnitt A₁ so klein wie möglich sein. Es muß aber - wie weiter oben bereits angedeutet - berücksichtigt werden, daß ein kleinerer Strömungsquerschnitt auch einen größeren Strömungswiderstand darstellt, der stromaufwärts der Strahlpumpe entlang der zusätzlichen Leitung für einen erhöhten, im Hinblick auf den Ladungswechsel nachteiligen und daher unerwünschten Abgasgegendruck sorgt.

Grundsätzlich gilt daher, daß im Hinblick auf die Auslegung bei niedrigen Lasten und niedrigen Drehzahlen ein kleinerer Strömungsquerschnitt A₁ gewählt werden sollte als bei hohen Lasten und hohen Drehzahlen. Es muß an dieser Stelle darauf hingewiesen werden, daß die Möglichkeit, das Verhältnis A₁ / A₂ <1 zu wählen und damit abweichend von herkömmlichen Brennkraftmaschinen nach dem Stand der Technik nicht A₁ / A₂ =1 ist, erst durch die erfindungsgemäße Gestaltung der Abgasführung möglich wird, da zwischen dem fördernden und dem unterstützten Abgasstrom durch separate Abgasleitungen strikt unterschieden wird bzw. diese Abgasströme voneinander getrennt werden. Erst hierdurch wird es möglich, den Rohrknoten kompromißlos im Sinne eines günstigen Strahlpumpeneffekts zu gestalten.

In diesem Zusammenhang muß aber auch das gemäß einer bevorzugten Ausführungsform in der Abgasleitung angeordnete Ventil erwähnt werden, mit dem auf die Größe des durch die Strahlpumpe geführten Abgasstromes Einfluß genommen werden kann, so daß die oben beschriebenen Effekte bei Verwendung eines Ventils durch Verstellung verstärkt, abgeschwächt bzw. kompensiert werden können.

Vorteilhaft sind Ausführungsformen der Brennkraftmaschine, bei denen die Phase zwischen Kurbelwinkel und Einlaßnockenwelle verstellbar ist.

Vorteilhaft sind Ausführungsformen der Brennkraftmaschine, bei denen die Phase zwischen Kurbelwinkel und Auslaßnockenwelle verstellbar ist.

Zu den beiden zuletzt genannten Ausführungsformen wurde prinzipiell schon Stellung genommen, und zwar grundsätzlich an sämtlichen Stellen der Beschreibung, an denen von den Steuerzeiten bzw. der Variation der Steuerzeiten die Rede ist. Dies ist insbesondere im Zusammenhang mit der Ventilüberschneidung und den Steuerzeiten des mindestens einen Einlaßventils erfolgt.

Die zweite der Erfindung zugrunde liegende Teilaufgabe wird gelöst durch ein Verfahren zur Optimierung des Ladungswechsels einer Brennkraftmaschine mit mindestens vier Zylindern, die in der Art konfiguriert sind, daß sie mindestens eine Untergruppe von vier Zylindern bilden, bei denen die Abstände der aufeinanderfolgenden Zündzeitpunkte jeweils in etwa 180°KW betragen, wobei jeder Zylinder mit mindestens einem Einlaßventil, welches eine Einlaßöffnung freigibt oder versperrt, und mit zwei Auslaßventilen, welche jeweils eine Auslaßöffnung freigeben oder versperren, ausgestattet ist, das dadurch gekennzeichnet ist, daß
■ die beiden Auslaßventile jedes Zylinders asynchron in der Art betätigt werden, daß sie im Hinblick auf ihre Steuerzeiten einen Versatz Δ aufweisen in der Art, daß die Öffnungszeiten einen Versatz Δ₁ ≥ 0 und die Schließzeiten einen Versatz Δ₂ ≥ 0 aufweisen so daß ein vorauslaufendes Auslaßventil, das früher geöffnet und geschlossen wird, und ein nachlaufendes Auslaßventil, das später geöffnet und geschlossen wird, ausgebildet wird,
■ die beiden Auslaßöffnungen jedes Zylinders jeweils mit einer separaten Abgasleitung, ausgestattet werden, wobei die beiden Abgasleitungen eines Zylinders nicht miteinander in Verbindung stehen,
■ die Auslaßöffnung des vorauslaufenden Auslaßventils eines Zylinders mit der Auslaßöffnung des nachlaufenden Auslaßventils des vorher gezündeten Zylinders mittels einer zusätzlichen Leitung verbunden wird, indem die zusätzliche Leitung von der Abgasleitung des vorauslaufenden Auslaßventils abgezweigt wird und an die Abgasleitung des nachlaufenden Auslaßventils angeschlossen wird, wobei die zusätzliche Leitung zusammen mit der Abgasleitung des nachlaufenden Auslaßventils zur Ausbildung einer Strahlpumpe verwendet wird, die einen ersten Strömungsquerschnitt A₁ für einen Abgasförderstrom und einem zweiten Strömungsquerschnitt A₂ für einen zu fördernden Abgasstrom aufweist.

Das bereits für die erfindungsgemäße Brennkraftmaschine Gesagte gilt in analoger Weise auch für das erfindungsgemäße Verfahren. Es wird insbesondere Bezug genommen auf die Ausführungen zu dem Versatz Δ der Steuerzeiten der Auslaßventile und auf die Ausführungen zu den Strömungsquerschnitten A₁ und A₂.

Wesentlich für das Verfahren ist die Verbindung der einzelnen Zylinder in geeigneter Weise. Die Auslaßöffnung des vorauslaufenden Auslaßventils eines Zylinders wird mit der Auslaßöffnung des nachlaufenden Auslaßventils des vorher gezündeten Zylinders mittels einer zusätzlichen Leitung verbunden. Werden die vier Zylinder einer Gruppe auf diese Weise miteinander gekoppelt, dann ist zwangsläufig auch das nachlaufende Auslaßventil eines Zylinders mit der Auslaßöffnung des vorlaufenden Auslaßventils des nachher gezündeten Zylinders verbunden. D. h. jeder Zylinder ist mit dem vorher und mit dem nachher gezündeten Zylinder verbunden. Dabei unterstützt er den Ladungswechsel des vorher gezündeten Zylinders und wird selbst beim Ladungswechsel von dem nach ihm gezündeten Zylinder unterstützt.

Vorteilhaft sind Ausführungsformen des Verfahrens, bei denen die Abgasleitungen der vorauslaufenden Auslaßventile - stromabwärts der Abzweigung der zusätzlichen Leitung - jeweils mit einem Ventil ausgestattet werden, und die beiden Abgasteilströme eines Zylinders, nämlich einerseits der durch die zusätzliche Leitung geführte Abgasteilstrom und andererseits der durch die mit dem Ventil versehene Abgasleitung geführte Abgasteilstrom, durch Verstellen dieses Ventils geregelt werden.

Ergänzend zu den bereits oben gemachten Ausführungen hinsichtlich der Anordnung eines Ventils in jeder Abgasleitung sei angemerkt, daß durch das Ventil bzw. die Ventile die Möglichkeit geschaffen wird, dem durch die Strahlpumpe bzw. die Strahlpumpen geführten Abgasstrom mengenmäßig zu regeln. Die Abgasleitung, in der das Ventil angeordnet ist, dient bei geöffnetem Ventil gewissermaßen als Bypaß für die Strahlpumpe. Nimmt aufgrund steigender Last und/oder steigender Drehzahl die Abgasmenge zu, stellt der Strömungsquerschnitt A₁ der Strahlpumpe für diese Abgasmenge einen immer größeren Strömungswiderstand dar. Dieser Effekt tritt mal früher und mal später auf und hängt von der Auslegung der Strahlpumpe im Einzelfall ab d. h. von der Größe des bereitgestellten Strömungsquerschnitts A₁. Wird der Strömungswiderstand der Strahlpumpe zu groß, wählt die Abgasströmung den Weg des geringsten Widerstandes d.h. bei entsprechend geöffnetem Ventil die Abgasleitung, in der das Ventil angeordnet ist, und nicht die zusätzliche Leitung, die zur Strahlpumpe führt.

Vorteilhaft sind daher Ausführungsformen des Verfahrens, bei denen das Ventil bzw. die Ventile mit zunehmender Last und/oder zunehmender Drehzahl in ihrem Strömungsquerschnitt vergrößert werden.

Diese Verfahrensvariante trägt dem Umstand Rechung, daß mit zunehmender Last und/oder zunehmender Drehzahl auch die Abgasmenge zunimmt. Wird ein geschlossenes Ventil als Grenzfall angenommen, dann müßte ein immer größer werdender Abgasstrom durch den unveränderlichen Strömungsquerschnitt A₁ geführt werden. Dies führt stromaufwärts der Strahlpumpe zu einer ungewollten Erhöhung des Abgasgegendruckes und einem verschlechterten Ladungswechsel. Folglich ist es vorteilhaft, den Strömungsquerschnitt des Ventils mit zunehmender Last und/oder zunehmender Drehzahl zu vergrößern.

Vorteilhaft sind aus denselben Gründen auch Ausführungsformen des Verfahrens, bei denen das Ventil bzw. die Ventile mit abnehmender Last und/oder abnehmender Drehzahl in ihrem Strömungsquerschnitt verkleinert werden.

Diesem Steuerungskonzept liegt die Absicht zugrunde, auch bei abnehmender Last und/oder abnehmender Drehzahl der damit verbundenen Abnahme der Abgasmenge Rechnung zu tragen und auch in diesen Betriebspunkten immer einen ausreichend großen Abgasstrom bereitzustellen, damit die Strahlpumpe effizient betrieben werden kann. Daher ist es vorteilhaft mit abnehmender Last und/oder abnehmender Drehzahl einen prozentual immer größeren Anteil des Abgasstromes durch die zusätzliche Leitung in Richtung Strahlpumpe zu führen, indem das Ventil in Richtung Schließstellung verstellt wird, wodurch der Strömungswiderstand des Ventils und damit der Abgasleitung, in der das Ventil angeordnet ist, erhöht wird.

Werden schnell steuerbare Ventile verwendet, kann es vorteilhaft sein, die Ventile nicht nur in Abhängigkeit vom jeweiligen Fahrzustand bzw. Betriebspunkt zu verstellen, sondern darüber hinaus die Strömungsquerschnitte der Ventile innerhalb eines Arbeitsspieles eines Zylinders zu verändern.

Vorteilhaft sind in diesem Zusammenhang Ausführungsformen des Verfahrens, bei denen das Ventil in seinem Strömungsquerschnitt verkleinert wird, bevor das vorauslaufende Auslaßventil geöffnet wird, vorzugsweise für weniger als 45°KW.

Vorteilhaft sind in diesem Zusammenhang auch Ausführungsformen des Verfahrens, bei denen das Ventil geschlossen wird, bevor das vorauslaufende Auslaßventil geöffnet wird, vorzugsweise für weniger als 45°KW.

Beide Ausführungsformen des Verfahrens berücksichtigen, daß es im Hinblick auf einen optimierten Ladungswechsel in erster Linie auf den Vorlastausstoß des vorauslaufenden Ventils ankommt und sich die als Vorlastausstoß bezeichnete Druckerhöhung zu Beginn des Öffnungsvorganges des vorauslaufenden Ventils als Druckwelle im Abgassystem ausbreitet. Unter Berücksichtigung dieses Umstandes ist es sinnvoll, das Ventil innerhalb eines definierten Kurbelwinkelfensters, das vorzugsweise < 45°KW ist und nahe der Steuerzeit, zu der das vorauslaufende Ventil öffnet, angesiedelt ist, im Hinblick auf den sich fortpflanzenden Vorlastausstoß und einen möglichst effektiven Ladungswechsel des zu unterstützenden Zylinders zu steuern d. h. in seinem Querschnitt zu verändern. Außerhalb dieses Kurbelwinkelfensters kann das Ventil dann im Hinblick auf andere Zielsetzungen, die beim Betrieb der Brennkraftmaschine relevant sind, gesteuert werden, beispielsweise im Hinblick auf eine möglichst geringe Ausschiebearbeit des diesem Ventil zugeordneten Zylinders.

Daher ist es vorteilhaft mit abnehmender Last und/oder abnehmender Drehzahl das Ventil in seinem Strömungsquerschnitt zu verkleinern, bevor das vorauslaufende Auslaßventil geöffnet wird, um auf diese Weise einen möglichst großen Anteil des Vorlastausstoßes durch die zusätzliche Leitung in Richtung Strahlpumpe zu leiten, so daß auch bei kleinen Abgasmengen ein ausreichend großer Abgasstrom die Strahlpumpe passiert und sich eine spürbare Unterstützung des vorher gezündeten Zylinders einstellt.

Umgekehrt ist es vorteilhaft, das Ventil bzw. die Ventile mit zunehmender Last und/oder zunehmender Drehzahl in ihrem Strömungsquerschnitt zu vergrößern, bevor das vorauslaufende Auslaßventil geöffnet wird, um auf diese Weise den Vorlastausstoßeffekt auf die Strahlpumpe abzuschwächen. Dies trägt dem Umstand Rechnung, daß mit zunehmender Last und/oder zunehmender Drehzahl die Abgasmenge ebenfalls zunimmt, wobei bei Erreichen einer bestimmten Abgasmenge die durch die Strahlpumpe erzielten Verbesserungen die durch den erhöhten Abgasgegendruck hervorgerufenen Nachteile kompensieren bzw. übersteigen können. Folglich sollte mit zunehmender Abgasmenge das Ventil weiter geöffnet werden, um nicht mehr Abgas durch die Strahlpumpe zu führen als dies für einen optimierten Ladungswechsel erforderlich ist.

Vorteilhaft sind in diesem Zusammenhang auch Ausführungsformen des Verfahrens, bei denen das Ventil geschlossen wird, bevor das vorauslaufende Auslaßventil geöffnet wird, vorzugsweise für weniger als 45°KW. Dieses Ventilsteuerungskonzept empfiehlt sich bei niedrigen Lasten und/oder niedrigen Drehzahlen. Für die Dauer des Vorlastausstoßes wird ein vergrößerter Abgasstrom der Strahlpumpe zugeführt.

Vorteilhaft sind Ausführungsformen des Verfahrens, bei denen die Brennkraftmaschine mit einer Ventilüberschneidung, bei der das mindestens eine Einlaßventil bereits geöffnet (EÖ) wird bevor die beiden Auslaßventile geschlossen (AS) werden, betrieben wird. Dabei soll im Rahmen der vorliegenden Erfindung auch von einer Ventilüberschneidung die Rede sein, wenn das mindestens eine Einlaßventil bereits geöffnet wird bevor das nachlaufende Auslaßventil geschlossen wird, aber das vorauslaufende Auslaßventil bereits geschlossen ist.

Wie bereits weiter oben ausgeführt, kann mittels einer Ventilüberschneidung in vorteilhafter Weise auf den Ladungswechsel Einfluß genommen werden. Ein Teil des angesaugten Gemisches bzw. der angesaugten Luft strömt bereits während der Ventilüberschneidung in den Brennraum und verdrängt die Restgasmenge, die sich im wesentlichen im Kompressionsvolumen befindet, was im Hinblick auf den hier behandelten Ladungswechsel zu einer größeren Zylinderfüllung und damit zu einer höheren Leistung beiträgt. Dabei ist es vorteilhaft, wenn gegen Ende der Evakuierung der Verbrennungsgase durch das nachlaufende Auslaßventil mittels der Strahlpumpe das mindestens eine Einlaßventil geöffnet ist, so daß sich im Brennraum kein Unterdruck aufbaut, der die Abgasförderung erschweren würde.

Nach dem Stand der Technik wird bei niedrigen Drehzahlen eine kleinere Ventilüberschneidung und bei größeren Drehzahlen eine größere Ventilüberschneidung angestrebt. Hinsichtlich der Steuerzeit, zu der das Einlaßventil schließt (ES), wird bei niedrigen Drehzahlen ein frühes Schließen und bei hohen Drehzahlen ein spätes Schließen des Einlaßventils bevorzugt, um eine möglichst gute Zylinderfüllung zu realisieren.

Verfügt die Brennkraftmaschine über einen Nockenwellenversteller zur Verstellung der Steuerzeiten des Einlaßventils, können die beiden genannten Ziele nicht gleichzeitig erfüllt werden, da bei einem Verschieben der Schließzeit des Einlaßventils (ES) nach früh zwangsläufig auch die Öffnungszeit des Einlaßventils (EÖ) nach früh verschoben wird, wodurch die Ventilüberschneidung gleichzeitig vergrößert wird.

Während dieser Zusammenhang bei herkömmlichen Brennkraftmaschinen bzw. Verfahren als nicht auflösbarer Konflikt angesehen wird, ist er im Hinblick auf das erfindungsgemäße Verfahren als vorteilhaft anzusehen. Denn der hier interessierende Ladungswechsel wird bei niedrigen Drehzahlen sowohl durch eine vergrößerte Ventilüberschneidung als auch durch ein frühes Schließen des Einlaßventils unterstützt. Ebenso wird der Ladungswechsel bei hohen Drehzahlen durch eine geringe Ventilüberschneidung und ein spätes Schließen des Einlaßventils positiv beeinflußt. Beides kann mittels eines Nockenwellenverstellers, der die Steuerzeiten des Einlaßventils variiert, realisiert werden.

Vorteilhaft sind daher einerseits Ausführungsformen des Verfahrens, bei denen bei niedrigen und mittleren Drehzahlen das mindestens eine Einlaßventil früh geschlossen wird, vorzugsweise 20°KW bis 40°KW nach UT, und/oder die Brennkraftmaschine mit einer großen Ventilüberschneidung betrieben wird, vorzugsweise mit einer Ventilüberschneidung von 40 bis 120°KW.

Vorteilhaft sind andererseits auch Ausführungsformen des Verfahrens, bei denen bei hohen Drehzahlen das mindestens eine Einlaßventil spät geschlossen wird, vorzugsweise 40°KW bis 80°KW nach UT, und/oder die Brennkraftmaschine mit einer kleinen Ventilüberschneidung betrieben wird, vorzugsweise mit einer Ventilüberschneidung von 0 bis 40°KW.

Vorteilhaft sind des weiteren Ausführungsformen des Verfahrens, bei denen mit der Kraftstoffeinspritzung erst begonnen wird, wenn die beiden Auslaßventile geschlossen sind. Dies hat zwei vorteilhafte Effekte zur Folge. Zum einen kann kein Kraftstoff, wohl aber zusätzliche Luft während der Ventilüberschneidung in den Abgastrakt gelangen ohne an der Verbrennung teilzunehmen. Dadurch kann zum einen eine gute Restgasausspülung ohne direkte Kraftstoffverluste erzielt werden. Zum anderen kann im Abgastrakt ein höheres Luft-Kraftstoff-Verhältnis realisiert werden als im Brennraum. Bei Vollast hat dies Vorteile und zwar sowohl hinsichtlich der Emissionen als auch hinsichtlich des Leistungsangebotes, denn es kann einerseits ein für den Katalysator günstiges stöchiometrisches Luftverhältnis λ = 1 im Abgastrakt und im Brennraum ein für die maximale Leistung vorteilhaftes, eher fettes Gemisch mit λ < 1 erzielt werden.

Im folgenden wird die Erfindung anhand eines Ausführungsbeispieles näher beschrieben. Hierbei zeigt:
- Fig. 1: schematisch eine Strahlpumpe im Längsschnitt,
- Fig. 2: in einem Diagramm den Zusammenhang zwischen dem Verhältnis der Strömungsflächen A₁ / A₂ und dem Verhältnis der Massenströme ṁ₂/ṁ₁ einer Strahlpumpe,
- Fig. 3: schematisch in einer perspektivischen Darstellung eine erste Ausführungsform einer Strahlpumpe,
- Fig. 4: in einem Diagramm die Ventilerhebungskurven einer ersten Ausführungsform der Brennkraftmaschine, und
- Fig. 5: schematisch eine erste Ausführungsform der Brennkraftmaschine.

Die Figuren 1 und 2 wurden bereits im Zusammenhang mit der Beschreibung der erfindungsgemäßen Brennkraftmaschine erörtert.

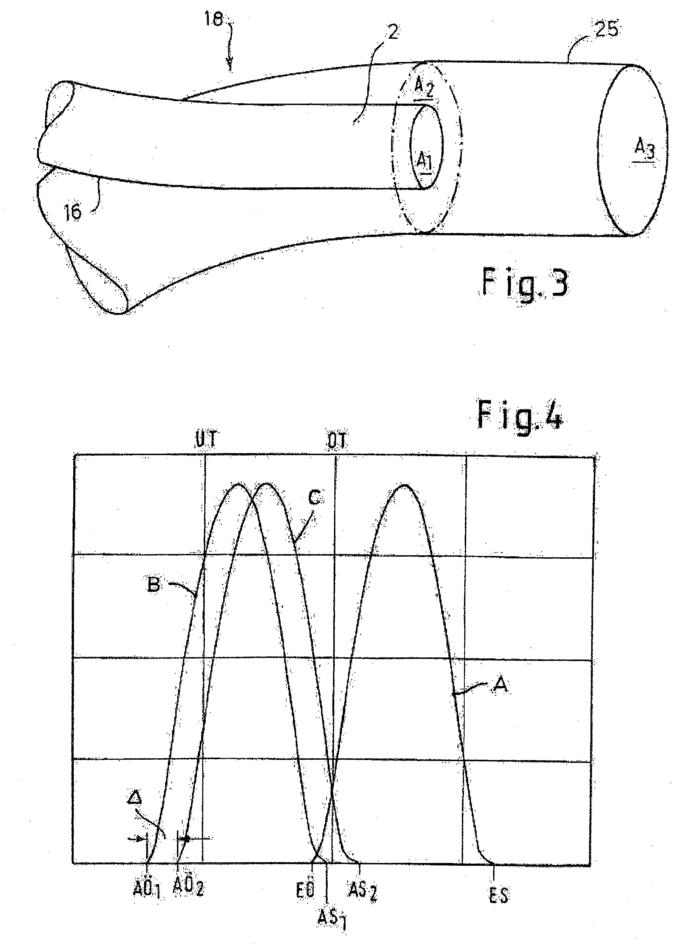

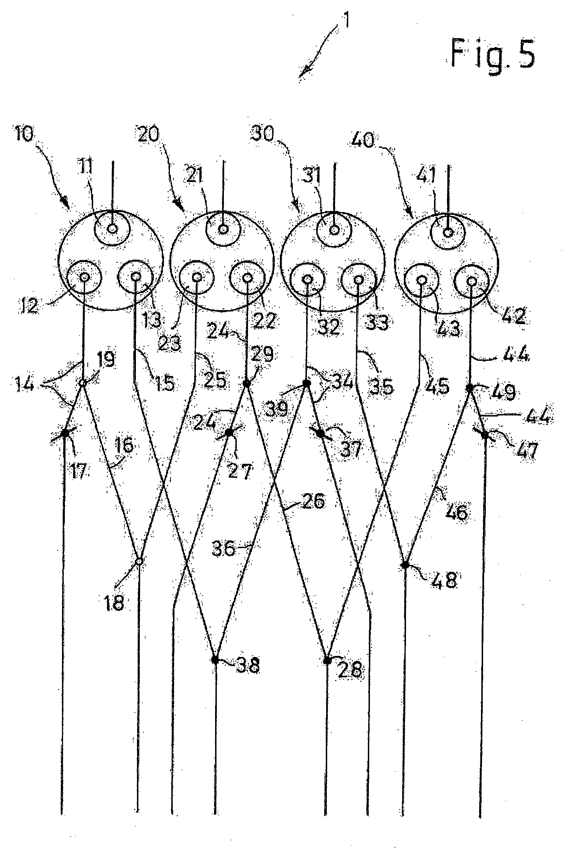

Die Figur 3 zeigt schematisch in einer perspektivischen Darstellung eine erste Ausführungsform einer Strahlpumpe 18, beispielsweise derjenigen Strahlpumpe 18, die aus der zusätzlichen Leitung 16, welche aus der Abgasleitung des vorauslaufenden Ventils des ersten Zylinders abzweigt, und der Abgasleitung 25 des nachlaufenden Auslaßventils des zweiten Zylinders gebildet wird (siehe auch Figur 5).

Dabei mündet die zusätzliche Leitung 16 in der Weise in die Abgasleitung 25, daß die Mündung 2 der zusätzlichen Leitung 16 von der Abgasleitung 25 umgeben ist, wobei die zusätzliche Leitung 16 einen ersten runden Strömungsquerschnitt A₁ für einen Abgasförderstrom - beispielsweise für einen Teilstrom des aus dem vorauslaufenden Ventil des ersten Zylinders austretenden Abgases - bildet und zwischen Abgasleitung 25 und zusätzlicher Leitung 16 ein zweiter ringförmiger Strömungsquerschnitt A₂ für einen zu fördernden Abgasstrom - beispielsweise für den aus dem nachlaufenden Ventil des zweiten Zylinders austretenden Abgasstrom - ausgebildet ist. Stromabwärts der Strahlpumpe 18 steht dem Abgasstrom ein Strömungsquerschnitt A₃ zur Verfügung.

Vorteilhaft an der dargestellten Ausführungsform einer Strahlpumpe 18 ist, daß die Mündung 2 der zusätzlichen Leitung 16 mittig in der Abgasleitung 25 angeordnet ist. Der fördernde Abgasstrom hoher Geschwindigkeit c₁ tritt durch den Querschnitt A₁ zentral in die Abgasleitung 25 des nachlaufenden Auslaßventils ein, was für einen guten Strahlpumpeneffekt sorgt d.h. der Fördereffekt auf den zweiten Abgasastrom ist dadurch besonders ausgeprägt.

Die Figur 4 zeigt in einem Diagramm die Ventilerhebungskurven A,B,C der Ventile eines Zylinders einer ersten Ausführungsform der Brennkraftmaschine, wobei die Kurve A die Ventilerhebungskurve des Einlaßventils, die Kurve B die Ventilerhebungskurve des ersten d. h. des vorauslaufenden Auslaßventils und die Kurve C die Ventilerhebungskurve des zweiten d. h. des nachlaufenden Auslaßventils darstellt.

Es ist ersichtlich, daß das vorauslaufende Auslaßventil und das nachlaufende Auslaßventil im Hinblick auf ihre Steuerzeiten einen Versatz Δ von etwa 15°KW aufweisen. Daß heißt, das vorauslaufende Auslaßventil öffnet (AÖ₁) im Bereich des unteren Totpunktes (UT) 15°KW früher als das nachlaufende Auslaßventil (AÖ₂) und es schließt (AS₁) auch im Bereich des oberen Totpunktes (OT) 15 °KW früher als das nachlaufende Auslaßventil (AS₂). Es können auch unterschiedliche Nocken für die beiden Auslaßventile auf der Nockenwelle vorgesehen werden, so daß sich der Versatz Δ hinsichtlich des Öffnungsvorganges und des Schließvorganges der Auslaßventile unterscheidet. Bei den in der Figur 4 dargestellten Erhebungskurven B,C wurden jedoch für die beiden Auslaßventile gleiche Nocken verwendet, so daß die Kurve C von der Gestalt identisch mit der Kurve B ist und lediglich um den Versatz Δ nach spät verschoben wurde.

Das eine Einlaßventil wird bereits geöffnet (EÖ) bevor die beiden Auslaßventile geschlossen (AS₁,AS₂) werden, so daß eine deutliche Ventilüberschneidung zwischen dem Einlaßventil und dem nachlaufenden, jedoch nur eine vernachlässigbare Ventilüberschneidung zwischen dem Einlaßventil und dem vorauslaufenden Auslaßventil vorliegt. Ein Teil des angesaugten Gemisches bzw. der angesaugten Luft strömt bereits während der Ventilüberschneidung in den Brennraum, was zu einer größeren Zylinderfüllung und damit zu einer höheren Leistung beiträgt.

Die Figur 5 zeigt schematisch eine erste Ausführungsform der Brennkraftmaschine 1.

Es handelt sich um einen Vier-Zylinder-Reihenmotor 1, bei dem infolge der Kröpfungsfolge der Kurbelwelle die Zündzeitpunkte der einzelnen Zylinder 10,20,30,40 jeweils den geforderten Abstand von 180°KW aufweisen. Dieser Vier-Zylinder-Reihenmotor 1 wird mit der üblichen Zündfolge 1 - 3 - 4 - 2 im Abstand von jeweils 180°KW betrieben, so daß zur Ausbildung einer erfindungsgemäßen Brennkraftmaschine 1 die Auslaßöffnung des vorauslaufenden Auslaßventils 12 des ersten Zylinders 10 mit der Auslaßöffnung des nachlaufenden Auslaßventils 23 des vorher gezündeten, zweiten Zylinders 20 durch eine zusätzliche Leitung 16 verbunden wird. Auf diese Weise wird der Ladungswechsel des zweiten Zylinders 20 durch den Abgasstrom des ersten Zylinders 10 unterstützt. Dabei zweigt eine zusätzliche Leitung 16 von der Abgasleitung 14 des vorauslaufenden Auslaßventils 12 des ersten Zylinders 10 ab, um in die Abgasleitung 25 des nachlaufenden Auslaßventils 23 des vorher gezündeten, zweiten Zylinders 20 unter Ausbildung einer Strahlpumpe 18 einzumünden.

Die anderen Zylinder 10,20,30,40 werden entsprechend miteinander verbunden, so daß jeder Zylinder 10,20,30,40 mit dem um 180°KW vorher und mit dem um 180°KW danach gezündeten Zylinder 10,20,30,40 in der beschriebenen Weise verbunden ist. Im einzelnen unterstützt der zweite Zylinder 20 den Ladungswechsel des vierten Zylinders 40, der vierte Zylinder 40 den Ladungswechsel des dritten Zylinders 30 und der dritte Zylinder 30 den Ladungswechsel des ersten Zylinders 10.

Allgemein formuliert zeigt die Figur 5 einen Vier-Zylinder-Reihenmotor 1, mit vier Zylindern 10,20,30,40, bei denen die Abstände der aufeinanderfolgenden Zündzeitpunkte jeweils etwa 180°KW betragen, wobei jeder Zylinder 10,20,30,40 mit einem Einlaßventil 11,21,31,41 und mit zwei Auslaßventilen 12,13,22,23,32,33,42,43 ausgestattet ist und die zwei Auslaßventile 12,13,22,23,32,33,42,43 im Hinblick auf ihre Steuerzeiten einen Versatz Δ in der Art aufweisen, daß jeder Zylinder 10,20,30,40 über ein vorauslaufendes Auslaßventil 12,22,32,42 und ein nachlaufendes Auslaßventil 13,23,33,43 verfügt.

Die dargestellte Brennkraftmaschine 1 ist dadurch gekennzeichnet, daß die beiden Auslaßöffnungen jedes Zylinders 10,20,30,40 jeweils über eine separate Abgasleitung 14,15,24,25,34,35,44,45 verfügen, die nicht miteinander in Verbindung stehen, wobei die Auslaßöffnung des vorauslaufenden Auslaßventils 12,22,32,42 eines Zylinders 10,20,30,40 mit der Auslaßöffnung des nachlaufenden Auslaßventils 13,23,33,43 des vorher gezündeten Zylinders 10,20,30,40 mittels einer zusätzlichen Leitung 16,26,36,46 in der Weise in Verbindung steht, daß die zusätzliche Leitung 16,26,36,46 von der Abgasleitung 14,24,34,44 des vorauslaufenden Auslaßventils 12,22,32,42 abzweigt und beim Übergang in die Abgasleitung 15,25,35,45 des nachlaufenden Auslaßventils 13,23,33,43 zusammen mit dieser Abgasleitung 15,25,35,45 eine Strahlpumpe 18,28,38,48 ausbildet.

In den Abgasleitungen 14,24,34,44 der vorauslaufenden Auslaßventile 12,22,32,42 ist jeweils stromabwärts der Abzweigung 19,29,39,49 der zusätzlichen Leitung 16,26,36,46 ein Ventil 17,27,37,47 vorgesehen, um die Aufteilung der Abgasströme in die beiden Abgasteilströme zu regeln.

### Bezugszeichen

- 1: Brennkraftmaschine
- 2: Mündung

- 10: erster Zylinder
- 11: Einlaßventil des ersten Zylinders
- 12: vorauslaufendes Auslaßventil des ersten Zylinders
- 13: nachlaufendes Auslaßventil des ersten Zylinders
- 14: Abgasleitung des vorauslaufenden Auslaßventils des ersten Zylinders
- 15: Abgasleitung des nachlaufenden Auslaßventils des ersten Zylinders
- 16: zusätzliche Leitung des ersten Zylinders
- 17: Ventil
- 18: Strahlpumpe
- 19: Abzweigung
- 20: zweiter Zylinder
- 21: Einlaßventil des zweiten Zylinders
- 22: vorauslaufendes Auslaßventil des zweiten Zylinders
- 23: nachlaufendes Auslaßventil des zweiten Zylinders
- 24: Abgasleitung des vorauslaufenden Auslaßventils des zweiten Zylinders
- 25: Abgasleitung des nachlaufenden Auslaßventils des zweiten Zylinders
- 26: zusätzliche Leitung des zweiten Zylinders
- 27: Ventil
- 28: Strahlpumpe
- 29: Abzweigung
- 30: dritter Zylinder
- 31: Einlaßventil des dritten Zylinders
- 32: vorauslaufendes Auslaßventil des dritten Zylinders
- 33: nachlaufendes Auslaßventil des dritten Zylinders
- 34: Abgasleitung des vorauslaufenden Auslaßventils des dritten Zylinders
- 35: Abgasleitung des nachlaufenden Auslaßventils des dritten Zylinders
- 36: zusätzliche Leitung des dritten Zylinders
- 37: Ventil
- 38: Strahlpumpe
- 39: Abzweigung
- 40: vierter Zylinder
- 41: Einlaßventil des vierten Zylinders
- 42: vorauslaufendes Auslaßventil des vierten Zylinders
- 43: nachlaufendes Auslaßventil des vierten Zylinders
- 44: Abgasleitung des vorauslaufenden Auslaßventils des vierten Zylinders
- 45: Abgasleitung des nachlaufenden Auslaßventils des vierten Zylinders
- 46: zusätzliche Leitung des vierten Zylinders
- 47: Ventil
- 48: Strahlpumpe
- 49: Abzweigung

- A: Ventilerhebungskurve des Einlaßventils
- A₁: erster Strömungsquerschnitt der Strahlpumpe
- A₂: zweiter Strömungsquerschnitt der Strahlpumpe
- A₃: Strömungsquerschnitt stromabwärts der Strahlpumpe
- AÖ₁: Steuerzeit Auslaß öffneterstes Auslaßventil
- AS₁: Steuerzeit Auslaß schließterstes Auslaßventil
- AÖ₂: Steuerzeit Auslaß öffnetzweites Auslaßventil
- AS₂: Steuerzeit Auslaß schließtzweites Auslaßventil
- B: Ventilerhebungskurve des ersten Auslaßventils
- C: Ventilerhebungskurve des zweiten Auslaßventils
- c₁: Strömungsgeschwindigkeit im ersten Strömungsquerschnitt
- c₂: Strömungsgeschwindigkeit im zweiten Strömungsquerschnitt
- c₃: Strömungsgeschwindigkeit stromabwärts der Strahlpumpe
- EÖ: Steuerzeit Einlaß öffnet
- ES: Steuerzeit Einlaß schließt
- KW: Kurbelwinkel
- ṁ₁: erster Massenstrom, erster Abgasstrom
- ṁ₂: zweiter Massenstrom, zweiter Abgasstrom
- OT: oberer Totpunkt
- pₒ: Druck stromabwärts der Strahlpumpe
- pₒ: Druck im ersten Massenstrom
- p: Druck im zweiten Massenstrom
- UT: unterer Totpunkt

- Δ: Versatz der Steuerzeiten der beiden Auslassventile
- Δ₁: Versatz der Öffnungszeiten der beiden Auslaßventile
- Δ₂: Versatz der Schließzeiten der beiden Auslaßventile

## Patentansprüche

1. Viertakt-Brennkraftmaschine (1) mit mindestens vier Zylindern (10, 20, 30, 40), die in der Art konfiguriert sind, daß sie mindestens eine Untergruppe von vier Zylindern (10, 20, 30, 40) bilden, bei denen die Abstände der aufeinanderfolgenden Zündzeitpunkte jeweils etwa 180°KW betragen, wobei jeder Zylinder (10, 20, 30, 40) mit mindestens einem Einlaßventil (11, 21, 31, 41), welches eine Einlaßöffnung freigibt oder versperrt, und mit zwei Auslaßventilen (12, 13, 22, 23, 32, 33, 42, 43), welche jeweils eine Auslaßöffnung freigeben oder versperren, ausgestattet ist und diese zwei Auslaßventile (12, 13, 22, 23, 32, 33, 42, 43) im Hinblick auf ihre Steuerzeiten einen Versatz Δ in der Art aufweisen, daß die Öffnungszeiten einen Versatz Δ₁ > 0 und die Schließzeiten einen Versatz Δ₂ ≥ 0 aufweisen und jeder Zylinder (10, 20, 30, 40) somit über ein vorauslaufendes Auslaßventil (12, 22, 32, 42) und ein nachlaufendes Auslaßventil (13, 23, 33, 43) verfügt,
**dadurch gekennzeichnet, daß**
die beiden Auslaßöffnungen jedes Zylinders (10, 20, 30, 40) jeweils über eine separate Abgasleitung (14, 15, 24, 25, 34, 35, 44, 45) verfügen, die nicht miteinander in Verbindung stehen, wobei die Auslaßöffnung des vorauslaufenden Auslaßventils (12, 22, 32, 42) eines Zylinders (10, 20, 30, 40) mit der Auslaßöffnung des nachlaufenden Auslaßventils (13, 23, 33, 43) des vorher gezündeten Zylinders (10, 20, 30, 40) mittels einer zusätzlichen Leitung (16, 26, 36, 46) in der Weise in Verbindung steht, daß die zusätzliche Leitung (16, 26, 36, 46) von der Abgasleitung (14, 24, 34, 44) des vorauslaufenden Auslaßventils (12, 22, 32, 42) abzweigt und beim Übergang in die Abgasleitung (15, 25, 35, 45) des nachlaufenden Auslaßventils (13, 23, 33, 43) zusammen mit dieser Abgasleitung (15, 25, 35, 45) eine Strahlpumpe (18, 28, 38, 48) ausbildet mit einem ersten Strömungsquerschnitt A₁ für einen Abgasförderstrom und einem zweiten Strömungsquerschnitt A₂ für einen zu fördernden Abgasstrom.

2. Brennkraftmaschine (1) nach Anspruch 1,
**dadurch gekennzeichnet, daß**
die zusätzliche Leitung (16, 26, 36, 46) in der Weise in die Abgasleitung (15, 25, 35, 45) mündet, daß die Mündung (2) der zusätzlichen Leitung (16, 26, 36, 46) von der Abgasleitung (15, 25, 35, 45) umgeben ist, wobei die zusätzliche Leitung (16, 26, 36, 46) einen ersten Strömungsquerschnitt A₁ für einen Abgasförderstrom bildet und zwischen Abgasleitung (15, 25, 35, 45) und zusätzlicher Leitung (16, 26, 36, 46) ein zweiter Strömungsquerschnitt A₂ für einen zu fördernden Abgasstrom ausgebildet ist.

3. Brennkraftmaschine (1) nach Anspruch 1 oder 2,
**dadurch gekennzeichnet, daß**
es sich um einen Vier-Zylinder-Reihenmotor handelt.

4. Brennkraftmaschine (1) nach Anspruch 1 oder 2,
**dadurch gekennzeichnet, daß**
es sich um einen Acht-Zylinder-V-Motor handelt, bei dem die acht Zylinder (10, 20, 30, 40) zu zwei Gruppen von jeweils vier Zylindern (10, 20, 30, 40) ausgebildet sind, wobei in jeder Gruppe die Abstände der aufeinander folgenden Zündzeitpunkte der Zylinder (10, 20, 30, 40) jeweils 180°KW betragen.

5. Brennkraftmaschine (1) nach einem der vorherigen Ansprüche,
**dadurch gekennzeichnet, daß**
die Abgasleitungen (14, 24, 34, 44) der vorauslaufenden Auslaßventile (12, 22, 32, 42) jeweils mit einem Ventil (17, 27, 37, 47) ausgestattet sind, wobei das Ventil (17, 27, 37, 47) stromabwärts der Abzweigung (19, 29, 39, 49) der zusätzlichen Leitung (16, 26, 36, 46) angeordnet ist.

6. Brennkraftmaschine (1) nach Anspruch 5,
**dadurch gekennzeichnet, daß**
das Ventil (17, 27, 37, 47) eine Drosselklappe umfaßt.

7. Brennkraftmaschine (1) nach einem der vorherigen Ansprüche,
**dadurch gekennzeichnet, daß**
für den Versatz Δ, Δ1, Δ2 der Steuerzeiten zwischen einem vorauslaufenden Auslaßventil (12, 22, 32,42) und einem nachlaufenden Auslaßventil (13, 23, 33, 43) eines Zylinders gilt: Δ, Δ1, Δ2 < 30°KW.

8. Brennkraftmaschine (1) nach Anspruch 7,
**dadurch gekennzeichnet, daß**
gilt: Δ, Δ₁, Δ₂ < 20°KW.

9. Brennkraftmaschine (1) nach Anspruch 7 oder 8,
**dadurch gekennzeichnet, daß**
gilt: 5°KW < Δ, Δ₁, Δ₂ < 15°KW.

10. Brennkraftmaschine (1) nach Anspruch 7, 8 oder 9,
**dadurch gekennzeichnet, daß**
gilt: 7,5°KW < Δ, Δ1, Δ2 < 12,5°KW.

11. Brennkraftmaschine (1) nach einem der vorherigen Ansprüche,
**dadurch gekennzeichnet, daß**
für den Versatz Δ1, Δ2 der Steuerzeiten zwischen einem vorauslaufenden Auslaßventil (12, 22, 32, 42) und einem nachlaufenden Auslaßventil (13, 23, 33, 43) eines Zylinders gilt: Δ1 = Δ2.

12. Brennkraftmaschine (1) nach einem der vorherigen Ansprüche,
**dadurch gekennzeichnet, daß**
die Strömungsflächen A1 und A2 in der Art ausgebildet sind, daß gilt: A1 / A2 < 0,8, vorzugsweise A1/A2 < 0,6.

13. Brennkraftmaschine (1) nach einem der vorherigen Ansprüche,
**dadurch gekennzeichnet, daß**
gilt: A1/A2 < 0,4, vorzugsweise A1/A2 < 0,2.

14. Brennkraftmaschine (1) nach einem der vorherigen Ansprüche,
**dadurch gekennzeichnet, daß**
die Phase zwischen Kurbelwinkel und Einlaßnockenwelle verstellbar ist.

15. Brennkraftmaschine (1) nach einem der vorherigen Ansprüche,
**dadurch gekennzeichnet, daß**
die Phase zwischen Kurbelwinkel und Auslaßnockenwelle verstellbar ist.

16. Verfahren zur Optimierung des Ladungswechsels einer Brennkraftmaschine (1) mit vier, acht oder zwölf Zylindern (10, 20, 30, 40), die in der Art konfiguriert sind, daß sie mindestens eine Gruppe von vier Zylindern (10, 20, 30, 40) bilden, bei denen die Abstände der aufeinanderfolgenden Zündzeitpunkte jeweils in etwa 180°KW betragen, wobei jeder Zylinder (10, 20, 30, 40) mit mindestens einem Einlaßventil (11, 21, 31, 41), welches eine Einlaßöffnung freigibt oder versperrt, und mit zwei Auslaßventilen (12, 13, 22, 23, 32, 33, 42, 43), welche jeweils eine Auslaßöffnung freigeben oder versperren, ausgestattet ist,
**dadurch gekennzeichnet, daß**
■ die beiden Auslaßventile jedes Zylinders (10, 20, 30, 40) asynchron in der Art betätigt werden, daß sie im Hinblick auf ihre Steuerzeiten einen Versatz Δ aufweisen in der Art, daß die Öffnungszeiten einen Versatz Δ₁ > 0 und die Schließzeiten einen Versatz Δ₂ ≥ 0 aufweisen so daß ein vorauslaufendes Auslaßventil (12, 22, 32, 42), das früher geöffnet und geschlossen wird, und ein nachlaufendes Auslaßventil (13, 23, 33, 43), das später geöffnet und geschlossen wird, ausgebildet wird,
■ die beiden Auslaßöffnungen jedes Zylinders (10, 20, 30, 40) jeweils mit einer separaten Abgasleitung (14, 15, 24, 25, 34, 35, 44, 45) ausgestattet werden, wobei die beiden Abgasleitungen (14, 15, 24, 25, 34, 35, 44, 45) eines Zylinders (10, 20, 30, 40) nicht miteinander in Verbindung stehen,
■ die Auslaßöffnung des vorauslaufenden Auslaßventils (12, 22, 32, 42) eines Zylinders (10, 20, 30, 40) mit der Auslaßöffnung des nachlaufenden Auslaßventils (13, 23, 33, 43) des vorher gezündeten Zylinders (10, 20, 30, 40) mittels einer zusätzlichen Leitung (16, 26, 36, 46) verbunden wird, indem die zusätzliche Leitung (16, 26, 36, 46) von der Abgasleitung (14, 24, 34, 44) des vorauslaufenden Auslaßventils (12, 22, 32, 42) abgezweigt wird und an die Abgasleitung (15, 25, 35, 45) des nachlaufenden Auslaßventils (13, 23, 33, 43) angeschlossen wird, wobei die zusätzliche Leitung (16, 26, 36, 46) zusammen mit der Abgasleitung (15, 25, 35, 45) des nachlaufenden Auslaßventils (13, 23, 33, 43) zur Ausbildung einer Strahlpumpe (18, 28, 38, 48) verwendet wird, die einen ersten Strömungsquerschnitt A₁ für einen Abgasförderstrom und einem zweiten Strömungsquerschnitt A₂ für einen zu fördernden Abgasstrom aufweist.

17. Verfahren nach Anspruch 16,
**dadurch gekennzeichnet, daß**
die Abgasleitungen (14, 24, 34, 44) der vorauslaufenden Auslaßventile (12, 22, 32, 42) - stromabwärts der Abzweigung (19, 29, 39, 49) der zusätzlichen Leitung (16, 26, 36, 46) - jeweils mit einem Ventil (17, 27, 37, 47) ausgestattet werden, und die beiden Abgasteilströme eines Zylinders (10, 20, 30, 40), nämlich einerseits der durch die zusätzliche Leitung (16, 26, 36, 46) geführte Abgasteilstrom und andererseits der durch die mit dem Ventil (17, 27, 37, 47) versehene Abgasleitung (14, 24, 34, 44) geführte Abgasteilstrom, durch Verstellen dieses Ventils (17, 27, 37, 47) geregelt werden.

18. Verfahren nach Anspruch 17,
**dadurch gekennzeichnet, daß**
die Ventile (17, 27, 37, 47) mit zunehmender Last und/oder zunehmender Drehzahl in ihrem Strömungsquerschnitt vergrößert werden.

19. Verfahren nach Anspruch 17 oder 18,
**dadurch gekennzeichnet, daß**
die Ventile (17, 27, 37, 47) mit abnehmender Last und/oder abnehmender Drehzahl in ihrem Strömungsquerschnitt verkleinert werden.

20. Verfahren nach einem der Ansprüche 17 bis 19,
**dadurch gekennzeichnet, daß**
das Ventil (17, 27, 37, 47) in seinem Strömungsquerschnitt verkleinert wird, bevor das vorauslaufende Auslaßventil (12, 22, 32, 42) geöffnet wird, vorzugsweise für weniger als 45°KW.

21. Verfahren nach Anspruch 20,
**dadurch gekennzeichnet, daß**
das Ventil (17, 27, 37, 47) geschlossen wird, bevor das vorauslaufende Auslaßventil (12, 22, 32, 42) geöffnet wird, vorzugsweise für weniger als 45°KW.

22. Verfahren nach einem der Ansprüche 16 bis 21,
**dadurch gekennzeichnet, daß**
die Brennkraftmaschine (1) mit einer Ventilüberschneidung, bei der das mindestens eine Einlaßventil (11, 21, 31, 41) bereits geöffnet (EÖ) wird bevor die beiden Auslaßventile (12, 13, 22, 23, 32, 33, 42, 43) geschlossen (AS) werden, betrieben wird.

23. Verfahren nach Anspruch 22,
**dadurch gekennzeichnet, daß**
bei niedrigen und mittleren Drehzahlen das mindestens eine Einlaßventil (11, 21, 31, 41) früh geschlossen wird, vorzugsweise 20°KW bis 40°KW nach UT, und/oder die Brennkraftmaschine (1) mit einer großer Ventilüberschneidung betrieben wird, vorzugsweise mit einer Ventilüberschneidung von 40 bis 120°KW.

24. Verfahren nach Anspruch 22 oder 23,
**dadurch gekennzeichnet, daß**
bei hohen Drehzahlen das mindestens eine Einlaßventil (11, 21, 31, 41) spät geschlossen wird, vorzugsweise 40°KW bis 80°KW nach UT, und/oder die Brennkraftmaschine (1) mit einer kleinen Ventilüberschneidung betrieben wird, vorzugsweise mit einer Ventilüberschneidung von 0 bis 40°KW.

25. Verfahren nach Anspruch 22, 23 oder 24,
**dadurch gekennzeichnet, daß**
mit der Kraftstoffeinspritzung erst begonnen wird, wenn die beiden Auslaßventile (12, 13, 22, 23, 32 33, 42, 43) geschlossen sind.

## Claims

1. Four-stroke internal combustion engine (1) having at least four cylinders (10, 20, 30, 40) which are configured in such a way that they form at least one subgroup of four cylinders (10, 20, 30, 40) in which the intervals between the successive ignition times are each 180°CA, wherein each cylinder (10, 20, 30, 40) is equipped with at least one inlet valve (11, 21, 31, 41) which opens or blocks an inlet opening, and having two outlet valves (12, 13, 22, 23, 32, 33, 42, 43) which each open or block an outlet opening, and said two outlet valves (12, 13, 22, 23, 32, 33, 42, 43) have an offset (Δ) with respect to their control times in such a way that the opening times have an offset Δ₁ > 0 and the closing times have an offset Δ₂ ≥ 0, and each cylinder (10, 20, 30, 40) therefore has a leading outlet valve (12, 22, 32, 42) and a trailing outlet valve (13, 23, 33, 43),
**characterized in that**
the two outlet openings of each cylinder (10, 20, 30, 40) each have a separate exhaust gas line (14, 15, 24, 25, 34, 35, 44, 45) which are not connected to one another, wherein the outlet opening of the leading outlet valve (12, 22, 32, 42) of a cylinder (10, 20, 30, 40) is connected to the outlet opening of the trailing outlet valve (13, 23, 33, 43), of the previously ignited cylinder (10, 20, 30, 40) by means of an additional line (16, 26, 36, 46) in such a way that the additional line (16, 26, 36, 46) branches off from the exhaust gas line (14, 24, 34, 44) of the leading outlet valve (12, 22, 32, 42) and at the junction with the exhaust gas line (15, 25, 35, 45) of the trailing outlet valve (13, 23, 33, 43) forms, together with said exhaust gas line (15, 25, 35, 45), a jet pump (18, 28, 38, 48) with a first flow cross section A₁ for an exhaust gas feed current and a second flow cross section A₂ for an exhaust gas current which is to be fed.

2. Internal combustion engine (1) according to Claim 1,
**characterized in that**
the additional line (16, 26, 36, 46) opens into the exhaust gas line (15, 25, 35, 45) in such a way that the mouth (2) of the additional line (16, 26, 36, 46) is surrounded by the exhaust gas line (15, 25, 35, 45), wherein the additional line (16, 26, 36, 46) forms a first flow cross section A₁ for an exhaust gas feed current, and a second flow cross section A₂ for an exhaust gas current to be fed is formed between the exhaust gas line (15, 25, 35, 45) and the additional line (16, 26, 36, 46).

3. Internal combustion engine (1) according to Claim 1 or 2,
**characterized in that**
the engine is a four-cylinder in-line engine.

4. Internal combustion engine (1) according to Claim 1 or 2,
**characterized in that**
the engine is an eight-cylinder V-type engine in which the eight cylinders (10, 20, 30, 40) are formed with two groups of in each case four cylinders (10, 20, 30, 40), wherein the intervals between the successive ignition times of the cylinders (10, 20, 30, 40) are respectively 180°CA in each group.

5. Internal combustion engine (1) according to one of the preceding claims,
**characterized in that**
the exhaust gas lines (14, 24, 34, 44) of the leading outlet valves (12, 22, 32, 42) are each equipped with a valve (17, 27, 37, 47), wherein the valve (17, 27, 37, 47) is arranged downstream of the branch (19, 29, 39, 49) of the additional line (16, 26, 36, 46).

6. Internal combustion engine (1) according to Claim 5,
**characterized in that**
the valve (17, 27, 37, 47) comprises a throttle valve.

7. Internal combustion engine (1) according to one of the preceding claims,
**characterized in that**
for the offset Δ, Δ₁, Δ₂ of the control times between a leading outlet valve (12, 22, 32, 42) and a trailing outlet valve (13, 23, 33, 43) of a cylinder, the following applies: Δ, Δ₁, Δ₂ < 30°CA.

8. Internal combustion engine (1) according to Claim 7,
**characterized in that**
the following applies: Δ, Δ₁, A₂ < 20° CA.

9. Internal combustion engine (1) according to Claim 7 or 8,
**characterized in that**
the following applies: 5° CA < Δ, Δ₁, Δ₂ < 15° CA.

10. Internal combustion engine (1) according to Claim 7, 8 or 9,
**characterized in that**
the following applies: 7.5° CA < Δ, Δ₁, Δ₂ < 12.5° CA.

11. Internal combustion engine (1) according to one of the preceding claims,
**characterized in that**
for the offset Δ₁, Δ₂ of the control times between a leading outlet valve (12, 22, 32, 42) and a trailing outlet valve (13, 23, 33, 43) of a cylinder the following applies: Δ₁ = Δ₂.

12. Internal combustion engine (1) according to one of the preceding claims,
**characterized in that**
the flow faces A1 and A2 are formed in such a way that the following applies: A1/A2 < 0.8, preferably A1/A2 < 0.6.

13. Internal combustion engine (1) according to one of the preceding claims,
**characterized in that**
the following applies: A1/A2 < 0.4, preferably A1/A2 < 0.2.

14. Internal combustion engine (1) according to one of the preceding claims,
**characterized in that**
the phase between the crank angle and the inlet camshaft is adjustable.

15. Internal combustion engine (1) according to one of the preceding claims,
**characterized in that**
the phase between the crank angle and the outlet camshaft is adjustable.

16. Method for optimizing the gas exchange of an internal combustion engine (1) having four, eight or twelve cylinders (10, 20, 30, 40) which are configured in such a way that they form at least one group of four cylinders (10, 20, 30, 40) in which the intervals between the successive ignition times are each approximately 180° CA, wherein each cylinder (10, 20, 30, 40) is equipped with at least one inlet valve (11, 21, 31, 41) which opens or blocks an inlet opening, and having two outlet valves (12, 13, 22, 23, 32, 33, 42, 43) which each open or block an outlet valve,
**characterized in that**
• the two outlet valves of each cylinder (10, 20, 30, 40) are activated asynchronously in such a way that with respect to their control times they have an offset Δ in such a way that the opening times have an offset Δ₁ > 0 and the closing times have an offset A₂ > 0, with the result that a leading outlet valve (12, 22, 32, 42) which is opened and closed earlier, and a trailing outlet valve (13, 23, 33, 43) which is opened and closed later, are formed,
• the two outlet openings of each cylinder (10, 20, 30, 40) are each equipped with a separate exhaust gas line (14, 15, 24, 25, 34, 35, 44, 45), wherein the two exhaust gas lines (14, 15, 24, 25, 34, 35, 44, 45) of a cylinder (10, 20, 30, 40) are not connected to one another,
• the outlet opening of the leading outlet valve (12, 22, 32, 42) of a cylinder (10, 20, 30, 40) is connected to the outlet opening of the trailing outlet valve (13, 23, 33, 43) of the previously ignited cylinder (10, 20, 30, 40) by means of an additional line (16, 26, 36, 46) **in that** the additional line (16, 26, 36, 46) branches off from the exhaust gas line (14, 24, 34, 44) of the leading outlet valve (12, 22, 32, 42) and is connected to the exhaust gas line (15, 25, 35, 45) of the trailing outlet valve (13, 23, 33, 43), wherein the additional line (16, 26, 36, 46) is used, together with the exhaust gas line (15, 25, 35, 45) of the trailing outlet valve (13, 23, 33, 43), to form a jet pump (18, 28, 38, 48) which has a first flow cross section A₁ for an exhaust gas feed current and a second flow cross section A₂ for an exhaust gas current which is to be fed.

17. Method according to Claim 16,
**characterized in that**
the exhaust gas lines (14, 24, 34, 44) of the leading outlet valves (12, 22, 32, 42) are each equipped with a valve (17, 27, 37, 47) downstream of the branch (19, 29, 39, 49) of the additional line (16, 26, 36, 46), and the two exhaust gas partial currents of a cylinder (10, 20, 30, 40), specifically, on the one hand, the exhaust gas partial current which is conducted through the additional line (16, 26, 36, 46) and, on the other hand, the exhaust gas partial current which is conducted through the exhaust gas line (14, 24, 34, 44) which is provided with the valve (17, 27, 37, 47), are regulated by adjusting said valve (17, 27, 37, 47).

18. Method according to Claim 17,
**characterized in that**
the flow cross section of the valves (17, 27, 37, 47) is made larger as the load increases and/or the rotational speed increases.

19. Method according to Claim 17 or 18, **characterized in that**
the flow cross section of the valves (17, 27, 37, 47) is made smaller as the load decreases and/or the rotational speed decreases.

20. Method according to one of Claims 17 to 19,
**characterized in that**
the flow cross section of the valve (17, 27, 37, 47) is made smaller before the trailing outlet valve (12, 22, 32, 42) is opened, preferably for less than 45°CA.

21. Method according to Claim 20,
**characterized in that**
the valve (17, 27, 37, 47) is closed before the leading outlet valve (12, 22, 32, 42) is opened, preferably for less than 45°CA.

22. Method according to one of Claims 16 to 21,
**characterized in that**
the internal combustion engine (1) is operated with a valve overlap in which the at least one inlet valve (11, 21, 31, 41) is already opened (IO) before the two outlet valves (12, 13, 22, 23, 32, 33, 42, 43) is closed (OC).

23. Method according to Claim 22,
**characterized in that**
at low and medium rotational speeds the at least one inlet valve (11, 21, 31, 41) is closed early, preferably 20°CA to 40°CA after bottom dead centre, and/or the internal combustion engine (1) is operated with a large valve overlap, preferably with a valve overlap of 40 to 120°CA.

24. Method according to Claim 22 or 23
**characterized in that**
at high rotational speeds the at least one inlet valve (11, 21, 31, 41) is closed late, preferably 40°CA to 80°CA after bottom dead centre, and/ or the internal combustion engine (1) is operated with a small valve overlap, preferably with a valve overlap of 0 to 40°CA.

25. Method according to Claim 22, 23, or 24,
**characterized in that**
the fuel injection is not started until the two outlet valves (12, 13, 22, 23, 32, 33, 42, 43) are closed.

## Revendications

1. Moteur à combustion interne à quatre temps (1) comprenant au moins quatre cylindres (10, 20, 30, 40), qui sont configurés de manière à former au moins un sous-groupe de quatre cylindres (10, 20, 30, 40), dans lesquels les distances des instants d'allumage successifs sont à chaque fois d'un angle de vilebrequin d'environ 180°, chaque cylindre (10, 20, 30, 40) étant muni d'au moins une soupape d'admission (11, 21, 31, 41) qui libère ou bloque une ouverture d'admission et de deux soupapes d'échappement (12, 13, 22, 23, 32, 33, 42, 43) qui libèrent ou bloquent à chaque fois une ouverture d'échappement et ces deux soupapes d'échappement (12, 13, 22, 23, 32, 33, 42, 43) présentant, en termes de leurs temps de commande, un décalage Δ tel que les temps d'ouverture présentent un décalage Δ₁ > 0 et que les temps de fermeture présentent un décalage Δ₂ ≥ 0 et que chaque cylindre (10, 20, 30, 40) dispose ainsi d'une soupape d'échappement en avance (12, 22, 32, 42) et d'une soupape d'échappement en retard (13, 23, 33, 43),
**caractérisé en ce que**
les deux ouvertures d'échappement de chaque cylindre (10, 20, 30, 40) disposent à chaque fois d'une conduite de gaz d'échappement séparée (14, 15, 24, 25, 34, 35, 44, 45), lesquelles ne sont pas en liaison les unes avec les autres, l'ouverture d'échappement de la soupape d'échappement en avance (12, 22, 32, 42) d'un cylindre (10, 20, 30, 40) étant en liaison avec l'ouverture d'échappement de la soupape d'échappement en retard (13, 23, 33, 43) du cylindre allumé préalablement (10, 20, 30, 40) au moyen d'une conduite supplémentaire (16, 26, 36, 46) de telle sorte que la conduite supplémentaire (16, 26, 36, 46) parte de la conduite de gaz d'échappement (14, 24, 34, 44) de la soupape d'échappement en avance (12, 22, 32, 42) et, lors du transfert dans la conduite de gaz d'échappement (15, 25, 35, 45) de la soupape d'échappement en retard (13, 23, 33, 43), constitue conjointement avec cette conduite de gaz d'échappement (15, 25, 35, 45) une pompe à jet (18, 28, 38, 48) avec une première section transversale d'écoulement A₁ pour un flux de gaz d'échappement refoulé et une deuxième section transversale d'écoulement A₂ pour un flux de gaz d'échappement à refouler.

2. Moteur à combustion interne (1) selon la revendication 1,
**caractérisé en ce que**
la conduite supplémentaire (16, 26, 36, 46) débouche dans la conduite de gaz d'échappement (15, 25, 35, 45) de telle sorte que l'embouchure (2) de la conduite supplémentaire (16, 26, 36, 46) soit entourée par la conduite de gaz d'échappement (15, 25, 35, 45), la conduite supplémentaire (16, 26, 36, 46) formant une première section transversale d'écoulement A₁ pour un flux de gaz d'échappement refoulé et une deuxième section transversale d'écoulement A₂ étant réalisée pour un flux de gaz d'échappement à refouler entre la conduite de gaz d'échappement (15, 25, 35, 45) et la conduite supplémentaire (16, 26, 36, 46).

3. Moteur à combustion interne (1) selon la revendication 1 ou 2,
**caractérisé en ce**
**qu'**il s'agit d'un moteur en ligne à quatre cylindres.

4. Moteur à combustion interne (1) selon la revendication 1 ou 2,
**caractérisé en ce**
**qu'**il s'agit d'un moteur en V à huit cylindres dans lequel les huit cylindres (10, 20, 30, 40) sont réalisés sous forme de deux groupes de quatre cylindres respectifs (10, 20, 30, 40), dans chaque groupe, les distances des instants d'allumage successifs des cylindres (10, 20, 30, 40) étant à chaque fois d'un angle de vilebrequin de 180°.

5. Moteur à combustion interne (1) selon l'une quelconque des revendications précédentes,
**caractérisé en ce que**
les conduites de gaz d'échappement (14, 24, 34, 44) des soupapes d'échappement en avance (12, 22, 32, 42) sont à chaque fois munies d'une soupape (17, 27, 37, 47), la soupape (17, 27, 37, 47) étant disposée en aval de la ramification (19, 29, 39, 49) de la conduite supplémentaire (16, 26, 36, 46).

6. Moteur à combustion interne (1) selon la revendication 5,
**caractérisé en ce que**
la soupape (17, 27, 37, 47) comprend un clapet d'étranglement.

7. Moteur à combustion interne (1) selon l'une quelconque des revendications précédentes,
**caractérisé en ce que**
pour le décalage Δ, Δ₁, Δ₂ des temps de commande entre une soupape d'échappement en avance (12, 22, 32, 42) et une soupape d'échappement en retard (13, 23, 33, 43) d'un cylindre, on a : Δ, Δ₁, Δ₂ < angle de vilebrequin de 30°.

8. Moteur à combustion interne (1) selon la revendication 7,
**caractérisé en ce que**
l'on a : Δ, Δ₁, Δ₂ < angle de vilebrequin de 20°.

9. Moteur à combustion interne (1) selon la revendication 7 ou 8,
**caractérisé en ce que**
l'on a : angle de vilebrequin de 5° < Δ, Δ₁, Δ₂ < angle de vilebrequin de 15°.

10. Moteur à combustion interne (1) selon la revendication 7, 8 ou 9,
**caractérisé en ce que**
l'on a : angle de vilebrequin de 7,5° < Δ, Δ₁, Δ₂ < angle de vilebrequin de 12,5°.

11. Moteur à combustion interne (1) selon l'une quelconque des revendications précédentes,
**caractérisé en ce que**
pour le décalage Δ₁, Δ₂ des temps de commande entre une soupape d'échappement en avance (12, 22, 32, 42) et une soupape d'échappement en retard (13, 23, 33, 43) d'un cylindre, on a : Δ₁ = Δ₂.

12. Moteur à combustion interne (1) selon l'une quelconque des revendications précédentes,
**caractérisé en ce que**
les surfaces d'écoulement A1 et A2 sont réalisées de telle sorte que l'on ait : A1 / A2 < 0,8, de préférence A1 / A2 < 0,6.

13. Moteur à combustion interne (1) selon l'une quelconque des revendications précédentes,
**caractérisé en ce que**
l'on a :
A1 / A2 < 0,4, de préférence A1 / A2 < 0,2.

14. Moteur à combustion interne (1) selon l'une quelconque des revendications précédentes,
**caractérisé en ce que**
la phase entre l'angle de vilebrequin et l'arbre à cames d'entrée est réglable.

15. Moteur à combustion interne (1) selon l'une quelconque des revendications précédentes,
**caractérisé en ce que**
la phase entre l'angle de vilebrequin et l'arbre à cames de sortie est réglable.

16. Procédé pour optimiser le transfert de charge d'un moteur à combustion interne (1) à quatre, huit ou douze cylindres (10, 20, 30, 40) qui sont configurés de telle sorte qu'ils forment au moins un groupe de quatre cylindres (10, 20, 30, 40), dans lesquels les distances des instants d'allumage successifs sont à chaque fois d'un angle de vilebrequin d'environ 180°, chaque cylindre (10, 20, 30, 40) étant muni d'au moins une soupape d'admission (11, 21, 31, 41) qui libère ou bloque une ouverture d'admission et de deux soupapes d'échappement (12, 13, 22, 23, 32, 33, 42, 43) qui libèrent ou bloquent à chaque fois une ouverture d'échappement,
**caractérisé en ce que**
- les deux soupapes d'échappement de chaque cylindre (10, 20, 30, 40) sont actionnées de manière asynchrone de telle sorte qu'elles présentent, en termes de leurs temps de commande, un décalage Δ tel que les temps d'ouverture présentent un décalage Δ₁ > 0 et que les temps de fermeture présentent un décalage Δ₂ ≥ 0 de telle sorte que l'on obtienne une soupape d'échappement en avance (12, 22, 32, 42) qui est ouverte et fermée plus tôt et une soupape d'échappement en retard (13, 23, 33, 43), qui est ouverte et fermée plus tard,
- les deux ouvertures d'échappement de chaque cylindre (10, 20, 30, 40) sont à chaque fois munies d'une conduite de gaz d'échappement séparée (14, 15, 24, 25, 34, 35, 44, 45), les deux conduites de gaz d'échappement (14, 15, 24, 25, 34, 35, 44, 45) d'un cylindre (10, 20, 30, 40) n'étant pas en liaison l'une avec l'autre,
- l'ouverture d'échappement de la soupape d'échappement en avance (12, 22, 32, 42) d'un cylindre (10, 20, 30, 40) étant connectée à l'ouverture d'échappement de la soupape d'échappement en retard (13, 23, 33, 43) du cylindre allumé préalablement (10, 20, 30, 40) au moyen d'une conduite supplémentaire (16, 26, 36, 46), **en ce que** la conduite supplémentaire (16, 26, 36, 46) part de la conduite de gaz d'échappement (14, 24, 34, 44) de la soupape d'échappement en avance (12, 22, 32, 42), et est raccordée à la conduite de gaz d'échappement (15, 25, 35, 45) de la soupape d'échappement en retard (13, 23, 33, 43), la conduite supplémentaire (16, 26, 36, 46) étant utilisée conjointement avec la conduite de gaz d'échappement (15, 25, 35, 45) de la soupape d'échappement en retard (13, 23, 33, 43) pour réaliser une pompe à jet (18, 28, 38, 48), qui présente une première section transversale d'écoulement A₁ pour un flux de gaz d'échappement refoulé et une deuxième section transversale d'écoulement A₂ pour un flux de gaz d'échappement à refouler.

17. Procédé selon la revendication 16,
**caractérisé en ce que**
les conduites de gaz d'échappement (14, 24, 34, 44) des soupapes d'échappement en avance (12, 22, 32, 42) - en aval de la ramification (19, 29, 39, 49) de la conduite supplémentaire (16, 26, 36, 46) - sont à chaque fois munies d'une soupape (17, 27, 37, 47), et les deux flux partiels de gaz d'échappement d'un cylindre (10, 20, 30, 40), à savoir d'une part le flux partiel de gaz d'échappement guidé à travers la conduite supplémentaire (16, 26, 36, 46) et d'autre part le flux partiel de gaz d'échappement guidé à travers la conduite de gaz d'échappement (14, 24, 34, 44) pourvue de la soupape (17, 27, 37, 47), sont régulés par réglage de cette soupape (17, 27, 37, 47).

18. Procédé selon la revendication 17,
**caractérisé en ce que**
la section transversale d'écoulement des soupapes (17, 27, 37, 47) est augmentée avec l'augmentation de la charge et/ou du régime.

19. Procédé selon la revendication 17 ou 18,
**caractérisé en ce que**
la section transversale d'écoulement des soupapes (17, 27, 37, 47) est réduite avec la diminution de la charge et/ou du régime.

20. Procédé selon l'une quelconque des revendications 17 à 19,
**caractérisé en ce que**
la section transversale d'écoulement de la soupape (17, 27, 37, 47) est réduite avant que la soupape d'échappement en avance (12, 22, 32, 42) ne soit ouverte, de préférence pour un angle de vilebrequin inférieur à 45°.

21. Procédé selon la revendication 20,
**caractérisé en ce que**
la soupape (17, 27, 37, 47) est fermée avant que la soupape d'échappement en avance (12, 22, 32, 42) ne soit ouverte, de préférence pour un angle de vilebrequin inférieur à 45°.

22. Procédé selon l'une quelconque des revendications 16 à 21,
**caractérisé en ce que**
le moteur à combustion interne (1) fonctionne avec un chevauchement des soupapes, dans lequel l'au moins une soupape d'admission (11, 21, 31, 41) est déjà ouverte (EÖ) avant que les deux soupapes d'échappement (12, 13, 22, 23, 32, 33, 42, 43) ne soient fermées (AS).

23. Procédé selon la revendication 22,
**caractérisé en ce que**
pour des bas régimes et des moyens régimes, l'au moins une soupape d'admission (11, 21, 31, 41) est fermée en avance, de préférence à un angle de vilebrequin de 20° à 40° après le point mort bas, et/ou **en ce que** le moteur à combustion interne (1) fonctionne avec un grand chevauchement des soupapes, de préférence avec un chevauchement des soupapes d'un angle de vilebrequin de 40 à 120°.

24. Procédé selon la revendication 22 ou 23,
**caractérisé en ce que**
pour de hauts régimes, l'au moins une soupape d'admission (11, 21, 31, 41) est fermée en retard, de préférence à un angle de vilebrequin de 40 à 80° après le point mort bas, et/ou **en ce que** le moteur à combustion interne (1) fonctionne avec un petit chevauchement des soupapes, de préférence avec un chevauchement des soupapes d'un angle de vilebrequin de 0 à 40°.

25. Procédé selon la revendication 22, 23 ou 24,
**caractérisé en ce que**
l'on ne commence l'injection de carburant que lorsque les deux soupapes d'échappement (12, 13, 22, 23, 32, 33, 42, 43) sont fermées.
